# EUROPÄISCHE PATENTSCHRIFT

(11) **EP 3 524 386 B1**
(45) Veröffentlichungstag und Bekanntmachung des Hinweises auf die Patenterteilung: **15.05.2024**
(21) Anmeldenummer: 19153175.5
(22) Anmeldetag: 23.01.2019
(51) Int. Cl.: B23Q 1/03, B24B 41/06, B23Q 1/62, B23Q 1/44

(54) **VORRICHTUNG ZUM ABSTÜTZEN EINES ZU BEARBEITENDEN WERKSTÜCKS**
DEVICE FOR SUPPORTING A WORKPIECE TO BE MACHINED
DISPOSITIF DE SOUTIEN D'UNE PIÈCE À USINER

(30) Priorität: 12.02.2018 DE 102018001131
(43) Veröffentlichungstag der Anmeldung: 14.08.2019
(73) Patentinhaber: VOLLMER WERKE Maschinenfabrik GmbH, 88400 Biberach/Riss (DE)
(72) Erfinder: Schmolke, Manfred, 88400 Biberach (DE); Barensteiner, Ulrich, 88299 Leutkirch (DE); Bergbaur, Michael, 8322 Graberberg/St. Marein bei Graz (AT)
(74) Vertreter: Thum, Bernhard

(56) Entgegenhaltungen:
- EP-A1- 0 299 915
- DE-A1-102015 003 367
- DE-B- 1 243 496

## Beschreibung

Die vorliegende Erfindung betrifft eine Vorrichtung zum Abstützen eines von einer Werkzeugmaschine zu bearbeitenden Werkstücks, umfassend:
- eine Auflagereinheit, die mit dem zu bearbeitenden Werkstück in Kontakt bringbar ist, und
- eine Positionieranordnung zum Positionieren der Auflagereinheit,
wobei die Positionieranordnung wenigstens eine erste Positioniereinheit zum Positionieren der Auflagereinheit entlang zumindest einer ersten Achse umfasst und wenigstens eine zweite Positioniereinheit zum Positionieren der Auflagereinheit in einer von einer zweiten und dritten Achse aufgespannten Ebene umfasst, wobei die erste Achse, die zweite Achse und die dritte Achse im Wesentlichen senkrecht zueinander verlaufen.

Derartige Vorrichtungen werden oftmals auch als Lünetten bezeichnet und dienen allgemein dazu, das Werkstück während dem Bearbeiten präzise abzustützen und in Position zu halten.

In diesem Zusammenhang offenbart das Dokument DE 10 2015 003 367 A1 eine Lösung zum Positionieren eines Abstützelements mittels einer Positionieranordnung, bei der zum spielfreien Positionieren Stellschrauben mit Federmitteln sowie mit elastisch deformierbaren Abschnitten zusammenwirken.

Das Dokument DE 10 2011 053 980 A1 offenbart eine Lünette mit einem Stützkörper, in dem eine in Längsrichtung verlaufende Stütznut vorgesehen ist. In der Stütznut kann ein zylindrisches Werkstück abgestützt werden. Die Lünette weist zur Ausrichtung und Positionierung der Stütznut mehrere Einstellachsen auf, die von zwei linearen Einstellachsen und einer Schwenkeinstellachse gebildet werden. Jede Einstellachse dient zur Relativverstellung zweier Einstellteile in einer betreffenden Einstellrichtung. Um ein versehentliches Verstellen einer Einstellachse zu verhindern, ist jeder Einstellachse jeweils ein Klemmmittel zugeordnet. Jedes Klemmmittel kann eine Klemmkraft zwischen den beiden Einstellteilen einer Einstellachse erzeugen, wobei die Klemmkraft quer bzw. rechtwinklig zur Einstellrichtung der betreffenden Einstellachse ausgerichtet ist.

Das Dokument DE 199 62 796 A1 offenbart eine Vorrichtung zum Schleifen von Werkzeugen. Die Vorrichtung umfasst eine Lünette zur Führung des zu schleifenden Werkzeugs. Die Vorrichtung umfasst zwei Führungsbahnen mit zwei inneren Seitenflächen, die zur Längsachse des zu schleifenden Werkzeugs parallel verlaufen und einen Winkel zur Aufnahme des zu schleifenden Werkzeugs einschließen. Das zu schleifende Werkzeug liegt mit seiner kreisförmigen Außenumfangsfläche zumindest an zwei der inneren Seitenflächen der Führungsbahnen an.

Das Dokument WO 2006/108316 A1 offenbart eine einstellbare Halterungsvorrichtung, bei der über die Betätigung verschiedener Hebel Schwenkbewegungen von verlagerbaren Komponenten veranlasst werden können.

Das Dokument DE 10 2005 006 242 A1 offenbart eine Schleifmaschine. Diese weist ein Maschinenbett und eine an diesem angeordnete, das zu bearbeitende Werkstück aufnehmende Werkstückspindel sowie eine neben dem Werkstück angeordnete Schleifstation mit einer Schleifspindel zur Aufnahme eines Schleifwerkzeugs auf. Ferner ist die Schleifmaschine mit einem am Maschinenbett zur Unterstützung des Werkstücks an der Schleifstelle angeordneten Werkstückführungssystem versehen. Das Werkstückführungssystem weist eine Werkstückaufnahme und eine Einstellvorrichtung auf, mit der die Werkstückaufnahme in ihrem Höhenabstand und Seitenabstand von der Achse der Werkstückspindel bzw. des darin eingespannten Werkstückes einstellbar ist. Die Einstellvorrichtung weist Festlagerkörper und an Widerlagern angebrachte Stellglieder in Form von Piezoantrieben auf, die mit den Festlagerkörpern zusammenwirken.

Das Dokument EP 0 299 915 A2 offenbart eine Einrichtung zum Bearbeiten eines Werkstücks. Ein Werkstück ist in einer Zange eingespannt und liegt mit seinem Schaft und mit seinem zu bearbeitenden Abschnitt jeweils auf einem unabhängig einstellbaren Auflager auf. Diese Auflager können in mehrere Richtungen feineingestellt werden, wobei für jedes Auflager eigene Positioniereinheiten vorgesehen sind, die jeweils mehrere individuelle Verstellmöglichkeiten vorsehen. Der mechanische Aufbau dieser Einrichtung ist daher vergleichsweise komplex.

Dokument DE 12 43 496 B, das die Basis für den Oberbegriff des beigefügten Anspruchs 1 bildet, offenbart eine Lünette zur Abstützung langer, wenig biegesteifer Werkstücke wie Kurbelwellen für vielzylindrige Großmotoren auf Bearbeitungsmaschinen. Ein Lünetten-Unterteil ist auf einem Maschinenbett in Richtung einer Werkstücklängsachse verschiebbar angeordnet. Ein Lünetten-Oberteil ist mit zwei Freiheitsgraden über eine Wälzlagerung und ein Betätigungselement gegenüber dem Lünetten-Unterteil verlagerbar. An dem Lünetten-Oberteil ist ferner ein Zapfen ausgebildet, der über ein Schwenklager einen Stützrollenträger um eine Achse parallel zur Werkstücklängsachse schwenkbar lagert. An dem Stützrollenträger sind zwei Lagerböcke angeordnet, die an dem Stützrollenträger an unterschiedlichen Positionen in Richtung quer zur Werkstücklängsachse festklemmbar sind.

Es hat sich gezeigt, dass die bekannten Lösungen für das Bearbeiten von langgestreckten Werkstücken nicht stets eine ausreichende Genauigkeit gewährleisten. Dies betrifft insbesondere langgestreckte Werkstücke, deren Längserstreckung oder - anders ausgedrückt - deren Länge eine maximale oder gemittelte Querschnittsabmessung um ein Vielfaches überschreitet (zum Beispiel ihren Durchmesser). Als Beispiele seien Überschreitungen um den Faktor 10, 20, 30 oder 40 genannt. Derartige Werkstücke können zum Beispiel in Form eines Bohrwerkzeugs und insbesondere eines Tieflochbohrers bereitgestellt sein.

Weitere Herausforderungen für das Abstützen resultieren daraus, dass das Werkstück eine ungleichmäßige Außenkontur aufweisen kann, zum Beispiel aufgrund variierender Querschnittsabmessungen entlang ihrer Längserstreckung. So können insbesondere Spitzen- oder Endabschnitte langgestreckter Werkzeuge eine andersartige Querschnittsabmessung oder Querschnittsform aufweisen als ein zylindrischer Hauptabschnitt des Werkstücks. Auch in diesem Fall ist es mit den bisherigen Lösungen nicht möglich, ein ausreichend präzises Abstützen zu erzielen, insbesondere dann, wenn der Aufbau der Vorrichtung wenig komplex gehalten werden soll.

Es ist eine Aufgabe der vorliegenden Erfindung, eine Vorrichtung und ein Verfahren zum Abstützen von zu bearbeitenden Werkstücken bereitzustellen, die einen einfachen Aufbau aufweist und die ein zuverlässiges Abstützen gewährleistet.

Diese Aufgabe wird mit einer Vorrichtung mit den in Anspruch 1 angegebenen Merkmalen sowie mit einem Verfahren gemäß Anspruch 16 gelöst.

Die erfindungsgemäße Vorrichtung zeichnet sich dadurch aus, dass die Auflagereinheit einen Kontaktbereich aufweist, mittels dem sie in Kontakt mit dem Werkstück bringbar ist, und der in zumindest einen ersten und einen zweiten Kontaktabschnitt unterteilt ist, und dass die Auflagereinheit eine dritte Positioniereinheit umfasst, die dazu ausgebildet ist, eine Relativanordnung zwischen dem ersten und dem zweiten Kontaktabschnitt zu ändern.

Erfindungsgemäß kann demnach vorgesehen sein, dass die Auflagereinheit als solches oder - anders ausgedrückt - im Ganzen mittels der Positionieranordnung im Raum positionierbar ist. Dies kann beispielsweise im Rahmen einer Grobpositionierung der Auflagereinheit relativ zu dem Werkstück erfolgen. Darüber hinaus weist die Auflagereinheit aber selbst einen zusätzlichen Freiheitsgrad auf, der über die dritte Positioniereinheit bereitgestellt wird. Hierdurch kann eine Feinpositionierung relativ zu dem Werkstück und insbesondere eine individuelle Anpassung der Auflagereinheit an die Außenkontur des Werkstücks erfolgen. Dies kann beispielsweise dann relevant sein, wenn das Werkstück variierende Querschnittsabmessungen und/oder -formen entlang seiner Längsachse aufweist.

Die Erfinder haben erkannt, dass ein zuverlässiges Abstützen verschiedenster Werkstücke mit stark unterschiedlichen Geometrien bei einem einfachen Aufbau der Vorrichtung dadurch erreicht werden kann, dass möglichst viele Positioniermöglichkeiten oder - mit anderen Worten - Freiheitsgrade in der gemeinsamen Positionieranordnung für die Auflagereinheit zusammengefasst werden. Dies reduziert die Anzahl der erforderlichen mechanischen Elemente und Wechselwirkungen und somit die Komplexität des Gesamtsystems. Ein flexibles Anpassen an individuelle Werkstückkonturen wird aber dennoch dadurch ermöglicht, dass die Auflagereinheit selbst einen eigenen Freiheitsgrad über die dritte Positioniereinheit umfasst.

Bei der Werkzeugmaschine kann es sich um eine mehrachsige NC-Werkzeugmaschine handeln. Die Werkzeugmaschine kann insbesondere dazu ausgebildet sein, eine Schleif- und/oder Schärfbearbeitung des Werkstücks auszuführen. Bei dem Werkstück kann es sich um ein langgestrecktes Werkstück handeln, wie zum Beispiel ein Bohrwerkzeug, einen länglichen Schaftfräser oder um ein ähnliches Werkzeug der eingangs diskutierten Art. Das Werkstück kann variierende Querschnittsabmessungen aufweisen. Zusätzlich oder alternativ kann das Werkstück zumindest abschnittsweise eine nicht (kreis-)zylindrische Form aufweisen. Gemäß einem Beispiel weist das Werkstück in einem Spitzen- oder Endabschnitt eine Form auf, die von der Form eines Hauptabschnitts des Werkstücks abweicht. Dabei kann der Hauptabschnitt einen Großteil der Werkstücklänge einnehmen. Insbesondere kann ein konisch oder spitz zulaufender, abgeflachter, sich verjüngender und/oder ein kegelförmiger Endabschnitt vorgesehen sein, der zudem einen nicht-kreisförmigen Querschnitt aufweisen kann.

Die Auflagereinheit kann allgemein eine Auflagefläche bilden, die insbesondere ein Abstützen gegen von einem Werkzeug weg gerichtete Verformungen des Werkstücks ermöglichen kann. Dies kann zum Beispiel eine Durchbiegung des Werkstücks vertikal nach unten betreffen und/oder allgemeine Vibrationen um dessen Längsachse. Die Auflagereinheit kann sich zumindest abschnittsweise entlang eines zu bearbeitenden Bereichs oder - anders ausgedrückt - entlang einer zu bearbeitenden Länge des Werkstücks erstrecken. Hierzu kann die Auflagereinheit und insbesondere deren erster und/oder zweiter Kontaktabschnitt eine Ausnehmung umfassen. Diese kann insbesondere langgestreckt ausgebildet sein und/oder sich entlang der Werkstücklängsachse erstrecken. Der erste und zweite Kontaktabschnitt können derart relativ zueinander anordenbar sein, dass die darin jeweils vorgesehenen Ausnehmungsabschnitte miteinander fluchten. Über das Ändern der Relativanordnung des ersten und zweiten Kontaktabschnitts kann aber auch ein gezielter Versatz zwischen diesen Ausnehmungsabschnitten eingestellt werden.

Zumindest der zweite Kontaktabschnitt kann aber nur einen vergleichsweise kurzen Ausnehmungsabschnitt umfassen und/oder allgemein das Werkstück im Wesentlichen lediglich punktuell abstützen. Die Kontaktabschnitte können ferner ein im Wesentlichen durchgängiges Abstützen des Werkstücks bereitstellen oder aber ein lediglich abschnittsweises Abstützen. Letzteres kann dadurch erreicht werden, dass das Werkstück lediglich abschnittsweise von dem jeweiligen Kontaktabschnitt kontaktiert wird. Ebenso kann das Werkstück aber im Wesentlichen durchgängig kontaktiert werden, d. h. im wesentlichen entlang seiner gesamten zu bearbeitenden Länge, wobei jedoch abschnittsweise kein abstützwirksamer Kontakt vorliegen muss. Dies trifft insbesondere auf gezielt deformierbare Bereiche der Auflagereinheit zu, wie zum Beispiel Festkörpergelenke, die zwar an dem Werkstück anliegen, dieses während der Bearbeitung aber nicht in nennenswertem Umfang abstützen können (d.h. im Wesentliche keine Abstützwirkung bereitstellen). In einer Ausführungsform sind der erste und der zweite Kontaktabschnitt über ein Festkörpergelenk axial voneinander beabstandet, wobei das Werkstück an dem Festkörpergelenk anliegt, jedoch in diesem Bereich nicht abstützwirksamen kontaktiert wird.

Die Positionieranordnung kann mehrere mechanische, elektrische und/oder hydraulische Elemente umfassen, die zum Bereitstellen der Positioniermöglichkeiten wechselwirken. Vorzugsweise beruht die Positionieranordnung aber auf einer ausschließlichen oder zumindest überwiegenden mechanischen Funktionsweise, sodass eine Positionierung zum Beispiel vollständig oder weitestgehend ohne hydraulische oder elektrische betätigte Elemente möglich ist. Allgemein kann die Positionieranordnung manuell betätigbar sein, zum Beispiel durch Betätigen von Stellschrauben oder anderweitigen verstellbaren Elementen.

Die Positioniereinheiten der Positionieranordnung können derart zusammenwirken, dass bei einem Positionieren der Auflagereinheit mittels der zweiten Positioniereinheit auch die erste Positioniereinheit entlang der entsprechenden zweiten und/oder dritten Achse positioniert wird. Zusätzlich oder alternativ kann vorgesehen sein, dass die zweite Positioniereinheit nicht mittels der ersten Positioniereinheit entlang der entsprechenden ersten Achse positionierbar ist.

Unter dem Positionieren entlang einer spezifischen Achse kann im Rahmen der vorliegenden Offenbarung allgemein das Positionieren (bzw. das Verstellen oder Bewegen) in Richtungen verstanden werden, die eine von null verschiedene Vektor- oder Richtungskomponente entlang dieser Achse umfassen. Diese Komponente kann auch einen überwiegenden oder vollständigen Anteil der entsprechenden Positionierbewegung bilden. Entsprechend kann auch ein Positionieren parallel zu dieser Achse vorgesehen sein.

Der erste und der zweite Kontaktabschnitt können separat voneinander ausgebildet sein. Diese kann über separate Elemente erfolgen, die unmittelbar nebeneinander positioniert sind und/oder aneinander anliegen. Ebenso ist es erfindungsgemäß möglich, dass der erste und zweite Kontaktabschnitt zumindest teilweise von einem gemeinsamen Element gebildet werden, das jedoch zumindest abschnittsweise elastisch deformierbar ist. Mit anderen Worten können der erste und zweite Kontaktabschnitt über ein elastisch deformierbares Festkörpergelenk miteinander verbunden und dabei zumindest abschnittsweise auch einstückig ausgebildet sein.

Das Ändern der Relativanordnung kann sich auf ein Ändern der Relativposition zwischen dem ersten und zweiten Kontaktabschnitt und/oder ein Ändern eines von diesen Kontaktabschnitten eingeschlossenen Winkels beziehen. Die dritte Positioniereinheit kann somit einen im Wesentlichen linearen, einen im Wesentlichen rotatorischen oder auch einen hieraus kombinierten Freiheitsgrad bereitstellen. Zum Beispiel können der erste und zweite Kontaktabschnitt relativ zueinander anhebbar und/oder absenkbar sein. Zusätzlich oder alternativ können der erste und zweite Kontaktabschnitt auch relativ zueinander verschwenkbar sein, sodass sich eine Winkeländerung erzielen lässt. Allgemein kann das Ändern der Relativanordnung ein Einstellen einer gewünschten Relativanordnung und insbesondere ein Anpassen an eine individuelle Werkstückkontur umfassen.

Auch die dritte Positioniereinheit kann ausschließlich oder zumindest überwiegend auf einer mechanischen Funktionsweise beruhen. Insbesondere kann diese manuell betätigbar sein, zum Beispiel über eine Stellschraube oder über anderweitige verstellbare Elemente. Beispielsweise kann auch eine manuelle Betätigung der dritten Positioniereinheit entlang einer Führung erfindungsgemäß vorgesehen sein, wobei die dritte Positioniereinheit dann nach Erreichen einer vorbestimmten Sollposition an dieser festgelegt werden kann. Die Festlegung kann über wenigstens eine Feststellvorrichtung, beispielsweise eine Feststellschraube erfolgen. Es ist auch möglich, mehrere Feststellschrauben vorzusehen. Die dritte Positioniereinheit kann ferner nahe von zumindest einem der Kontaktabschnitte angeordnet sein und/oder unmittelbar mit diesem wechselwirken.

Schließlich kann vorgesehen, dass der Kontaktbereich auch noch in weitere Kontaktabschnitte unterteilt ist, die ebenfalls mittels einer gesonderten Positioniereinheit der Auflagereinheit relativ zueinander positionierbar sind und gegebenenfalls über weitere Feststellvorrichtungen in einer bestimmten Position festlegbar sind. Mit anderen Worten kann die Auflagereinheit eine Mehrzahl eigener Positioniereinheiten umfassen, die analog zu der dritten Positioniereinheit ausgebildet sein können.

Gemäß einer Weiterbildung ist die dritte Positioniereinheit unabhängig von der ersten und zweiten Positioniereinheit der Positionieranordnung betätigbar. Wenn die Positionieranordnung noch weitere Positioniereinheiten umfasst, kann die dritte Positioniereinheit auch von diesen unabhängig betätigbar sein. Das heißt, die dritte Positioniereinheit kann allgemein unabhängig von der Positionieranordnung betätigbar sein. Somit kann gewährleistet werden, dass die Auflagereinheit für sich genommen einen eigenen Freiheitsgrad besitzt, der unabhängig von den über die Positionieranordnung bereitgestellten Positioniermöglichkeiten betätigbar ist. Die Möglichkeit zur unabhängigen Betätigung kann über separate Betätigungselemente bereitgestellt werden, die den Positioniereinheiten jeweils individuell zugeordnet sind. Die Betätigungselemente können zum Beispiel Stellschrauben umfassen. Wie vorstehend bereits ausgeführt, kann die dritte Positioniereinheit gemäß einer Ausführungsvariante der Erfindung auch entlang vorbestimmte Freiheitsgrade, beispielsweise entlang einer oder mehrerer Achsrichtungen oder schräg hierzu, geführt sein, sodass eine geführte manuelle Verstellung oder eine geführte Verstellung mittels der Betätigungselemente entlang dieser Freiheitsgrade möglich ist. Grundsätzlich kann die Positioniereinheit dann in ihrer erreichten Solllage festgelegt werden.

Die Auflagereinheit kann dazu ausgebildet sein, das zu bearbeitende Werkstück zumindest entlang der Hälfte einer zu bearbeitenden Länge abzustützen. Die Länge, entlang derer ein Abstützen mittels der Auflagereinheit erfolgt, kann eine Länge betreffen, entlang derer eine im Wesentlichen durchgängige Unterstützung erfolgt oder eine aus einzelnen Abschnitte zusammengesetzte Länge, in denen die Auflagereinheit das Werkstück abstützt. Insbesondere kann ein Abstützen über zumindest zwei Drittel, drei Viertel oder vier Fünftel der zu bearbeitenden Länge erfolgen. Allgemein kann die Vorrichtung einen Bearbeitungsbereich aufweisen, in den sich das Werkstück mit der zu bearbeitenden Länge hinein erstrecken kann. Insbesondere kann die Vorrichtung dazu ausgebildet sein, Werkstücke bis zu einer vorbestimmten maximalen Bearbeitungslänge zu bearbeiten. Die Auflagereinheit kann demnach allgemein dazu ausgebildet sein, das zu bearbeitende Werkstück zumindest entlang der Hälfte der in dem Bearbeitungsbereich anordenbaren Werkstücklänge abzustützen und/oder entlang der Hälfte der maximalen Bearbeitungslänge. Hierdurch können auch vergleichsweise lange Werkstücke, die ein Längen-Durchmesser-Verhältnis von mehr als 10 oder mehr als 40 aufweisen, zuverlässig abgestützt werden.

Die dritte Positioniereinheit kann dazu eingerichtet sein, eine Relativanordnung des ersten und zweiten Kontaktabschnitts entlang wenigstens einer vorbestimmten Achse zu ändern. Die vorbestimmte Achse kann insbesondere im Wesentlichen parallel zu der ersten Achse oder der zweiten Achse verlaufen oder auch mit diesem zusammenfallen. Demnach kann vorgesehen sein, dass die dritte Positioniereinheit, vorzugsweise unabhängig von den weiteren Positioniereinheiten, ebenfalls eine Positionierermöglichkeit entlang der ersten Achse der ersten Positioniereinheit oder der zweiten Achse der zweiten Positioniereinheit bereitstellt. Gemäß einer Ausführungsform verläuft die erste Achse im Wesentlichen vertikal, sodass die Auflagereinheit über die erste Positioniereinheit insgesamt vertikal positionierbar ist, der erste und zweite Kontaktabschnitt über die dritte Positioniereinheit aber auch relativ zueinander vertikal positionierbar sind.

Allgemein kann die dritte Positioniereinheit eine im Wesentlichen lineare Positioniermöglichkeit entlang der ersten oder zweiten Achse bereitstellen, um die Relativanordnung des ersten und zweiten Kontaktabschnitts in gewünschter Weise anzupassen. Dies kann beispielsweise dadurch realisiert werden, dass der zweite Kontaktabschnitt entlang einer Linearführung relativ zum ersten Kontaktabschnitt geführt ist. Zusätzlich oder alternativ kann eine Betätigung der dritten Positioniereinheit mit einer Winkeländerung zwischen den Kontaktabschnitten einhergehen. Eine einfache Realisierung einer solchen Führung ist beispielsweise dadurch möglich, dass der zweite Kontaktabschnitt über einen Bolzen entlang wenigstens eines Langlochs geführt ist, sodass er innerhalb des Langlochs verlagerbar und um den Bolzen verschwenkbar ist.

Eine Weiterbildung sieht vor, dass die dritte Positioniereinheit wenigstens ein verlagerbares Element umfasst, das dazu ausgebildet ist, den ersten oder den zweiten Kontaktabschnitt in eine definierte Richtung entlang der vorbestimmten Achse zu drängen. Das verlagerbare Element kann in Form einer Stellschraube bereitgestellt sein. Ferner kann das verlagerbare Element in unmittelbarer Nähe zu dem ersten oder zweiten Kontaktabschnitt angeordnet sein und auch unmittelbar mit diesen wechselwirken. Das Wechselwirken kann ein Abstützen oder Kontaktieren des ersten oder zweiten Kontaktabschnitts durch das verlagerbare Element umfassen.

Die dritte Positioniereinheit kann wenigstens einen elastisch deformierbaren Abschnitt umfassen und dazu ausgebildet sein, die Relativanordnung des ersten und zweiten Kontaktabschnitts unter einer elastischen Deformation des elastisch deformierbaren Abschnitts zu ändern. Bei dem elastisch deformierbaren Abschnitt kann es sich, wie vorstehend bereits erläutert, um ein Festkörpergelenk handeln. Der elastisch deformierbare Abschnitt kann den ersten und zweiten Kontaktabschnitt miteinander verbinden und nach Maßgabe einer Änderung von deren Relativanordnung deformierbar sein. Dies kann auch mit dem Erzeugen vorbestimmter Rückstellkräfte einhergehen, um eine möglichst spielfreie Funktionsweise der dritten Positioniereinheit zu erreichen. Zusätzlich kann auch eine Feststellschraube oder ein verstellbarer Anschlag vorgesehen sein, um die dritte Positioniereinheit nach einer Einstellung in einer Solllage festzulegen.

Der erste und der zweite Kontaktabschnitt können voneinander verschiedene Längen aufweisen. Gemäß einer Variante weist der zweite Kontaktabschnitt der Auflagereinheit eine geringere Länge auf als der erste Kontaktabschnitt, zum Beispiel nicht mehr als die Hälfte, nicht mehr als ein Drittel, nicht mehr als ein Viertel, nicht mehr als ein Fünftel oder nicht mehr als ein Achtel der Länge des ersten Kontaktabschnitts. Der zweite Kontaktabschnitt kann allgemein dazu vorgesehen sein, im Wesentlichen einen Spitzen- oder Endabschnitte des Werkstücks abzustützen, wohingegen der erste Kontaktabschnitt dazu vorgesehen sein kann, im Wesentlichen einen Hauptabschnitt des Werkstücks abzustützen, Mittels dieser Variante kann gewährleistet werden, dass über das Ändern der Relativanordnung von erstem und zweitem Kontaktabschnitt auf Abweichungen der Werkstückkontur zwischen dem Spitzen- oder Endabschnitt und dem Hauptabschnitt reagiert werden kann.

Zusätzlich oder alternativ kann der erste Kontaktabschnitt näher an einer Werkstückeinspannung der Werkzeugmaschine positionierbar sein als der zweiteKontaktabschnitt. Auch dies gewährleistet, dass der erste Kontaktabschnitt einen typischerweise nahe der Werkstückeinspannung angeordneten und sich von dieser aus erstreckenden Hauptabschnitt des Werkstücks abstützen kann, wohingegen der zweite Kontaktabschnitt eine Spitzen- oder Endabschnitt des Werkstücks abstützen kann.

Die Vorrichtung kann ferner eine Klemmanordnung umfassen, die dazu ausgebildet ist, das zu bearbeitende Werkstück festzuklemmen, während dieses von der Auflagereinheit abgestützt wird. Die Klemmanordnung kann während des Bearbeitens des Werkstücks auch lediglich selektiv betätigbar sein, zum Beispiel um lediglich in ausgewählten Bearbeitungssituationen eine Klemmfunktion bereitzustellen. Eine solche Bearbeitungssituation kann das Bearbeiten einer Werkstückspitze und/oder eines axialen End- oder Stirnflächenbereichs des Werkstücks umfassen. Diese Bereiche können von einem Spitzen- oder Endabschnitt des Werkstücks umfasst sein, der von einer Werkstückeinspannung der Werkzeugmaschine abgewandt ist. Die Klemmanordnung kann eine Klemmeinheit oder - anders ausgedrückt - einen Niederhalter umfassen, der mit dem Werkstück in Kontakt bringbar ist oder sich zumindest mittelbar daran abstützen kann. Die Klemmeinheit kann über eine Antriebseinheit in Richtung des Werkstücks bewegt oder von diesem abgehoben werden.

Gemäß einer Variante ist die Klemmeinheit relativ zu dem Werkstück verschwenkbar, wobei die Antriebseinheit einen Schwenkantrieb umfasst. Der Schwenkantrieb kann einen vorzugsweise elektrischen Motor und ein Stirnradgetriebe umfassen, das mit einer Verzahnung der Klemmeinheit in Eingriff steht. Hierdurch lässt sich ein platzsparender Aufbau der Klemmanordnung erzielen und ferner eine von dem Werkstückdurchmesser im Wesentlichen unabhängige Klemmkraft erzeugen, die auf das Werkstück aufbringbar ist.

Die Klemmanordnung kann zum Festklemmen des Werkstücks dazu ausgebildet sein, mit einem Abschnitt des zu bearbeitenden Werkstücks in Wechselwirkung zu treten (und insbesondere diesen zu kontaktieren), der nahe oder im Bereich des ersten Kontaktabschnitts angeordnet ist. Dies kann über die vorstehend erläuterte Klemmeinheit beziehungsweise den Niederhalter der Klemmanordnung erfolgen. Allgemein kann die Klemmanordnung einen Klemmabschnitt umfassen, der wenigstens in einem klemmaktiven Zustand gegenüberliegend zu oder zumindest in der Nähe von dem zweiten Kontaktabschnitt positionierbar ist. Mit anderen Worten kann die Klemmanordnung dazu ausgebildet sein, das Werkstück im Wesentlichen gegen den zweiten Kontaktabschnitt zu verklemmen. Ebenso kann aber ein Verklemmen gegen den ersten Kontaktabschnitt vorgesehen sein, wobei ein Kontakt zwischen der Klemmanordnung und dem Werkstück vorzugsweise gegenüberliegend zu dem ersten Kontaktabschnitt, aber in der Nähe von dem zweiten Kontaktabschnitt erfolgt.

Eine Weiterbildung sieht vor, dass die Positionieranordnung einen Kopplungsbereich umfasst, an dem die Auflagereinheit angeordnet ist, wobei der Kopplungsbereich nach Maßgabe einer Positionierung der ersten und zweiten Positioniereinheit positionierbar ist. Der Kopplungsbereich kann zum Beispiel plattenförmig ausgebildet sein und/oder eine Plattform umfassen, auf der die Auflagereinheit angeordnet ist. Der Kopplungsbereich kann über die erste und zweite Positioniereinheit der Positionieranordnung flexibel im Raum anordenbar sein und die entsprechenden Positionierungsbewegungen auf die Auflagereinheit übertragen.

Allgemein können die Auflagereinheit und die Positionieranordnung fest miteinander verbunden sein, beispielsweise über eine Verschraubung. Hierzu können in dem Kopplungsbereich Bohrungen vorgesehen sein, um das Einführen von Befestigungsschrauben zu ermöglichen. Alternativ können die Auflagereinheit und die Positionieranordnung aber auch zumindest teilweise einstückig ausgebildet sein, solange weiterhin die vorstehend erläuterte Möglichkeit zum Ändern der Relativanordnung zwischen dem ersten und zweiten Kontaktabschnitt besteht.

Die erste Positioniereinheit kann wenigstens eine erste Positionseinstelleinheit umfassen, die wenigstens einen elastisch deformierbaren Bereich und/oder wenigstens ein Festkörpergelenk umfasst. Gemäß einer Ausführungsform umfasst die erste Positioniereinheit wenigstens zwei separate Positionseinstelleinheiten, die vorzugsweise beide jeweils einen elastisch deformierbaren Bereich umfassen. Die Positionseinstelleinheiten können ferner im Wesentlichen gleichartig ausgebildet sein oder zumindest auf gleichartigen Wirkprinzipien beruhen. Allgemein können die Positionseinstelleinheiten in einer gemeinsamen Ebene angeordnet sein, die vorzugsweise ferner die Werkstücklängsachse enthält oder parallel zu dieser verläuft.

Gemäß einer Ausführungsform umfasst der elastisch deformierbare Bereich (und/oder das Festkörpergelenk) wenigstens zwei Abschnitte, deren relativer Abstand zueinander veränderbar ist. Diese Abstandsänderung kann mit einer Änderung einer weiteren Abmessung des deformierbaren Bereichs einhergehen. Die weitere Abmessung kann sich im Wesentlichen senkrecht zu einer Achse der Abstandsänderung erstrecken. Beispielsweise können die beiden Abschnitte zumindest einen Teil eines Parallelogramms, eines Trapezes, einer Raute, einer Ellipse oder dergleichen bilden bzw. begrenzen. Infolge einer Abstandsänderung der elastisch deformierbaren Abschnitte können die hiervon geformten Elemente vorzugsweise unter einer elastischen Deformation gestaucht und/oder gestreckt werden, was mit einer Positions- bzw. Abmessungsänderung entlang der ersten Achse einhergehen kann.

Zur Abstandsänderung der Abschnitte kann einer der Abschnitte einen Eingriffsbereich aufweisen (zum Beispiel in Form eines Gewindes), der mit einem verlagerbaren Element in Eingriff steht oder in Eingriff bringbar ist (zum Beispiel in Form einer Stellschraube). Das verlagerbare Element kann sich ferner an dem anderen der wenigstens zwei Abschnitte abstützen, zum Beispiel über einen Stellschraubenkopf. Wird dieses Element verlagert (zum Beispiel durch Ändern einer Einschraubtiefe oder allgemein einer Eingriffslänge mit dem Eingriffsbereich), können die beiden Abschnitte aufeinander zu oder voneinander weg gedrängt werden. Dies kann in der vorstehend erläuterten Abstandsänderung resultieren, die wiederum eine Positions- bzw. Abmessungsänderung entlang der ersten Achse ermöglichen kann.

Um eine möglichst spielfreie Abstandsänderung zwischen den elastisch deformierbaren Abschnitten zu erzielen, kann zwischen ihnen ferner ein Federelement angeordnet sein (zum Beispiel in Form eines Tellerfederpaketes). Dieses kann nach Maßgabe einer Abstandsänderung zwischen den Abschnitten elastisch deformierbar sein. Das verlagerbare Element kann sich zumindest abschnittsweise durch dieses Federelement hindurch erstrecken. Eine Deformation des Federelements kann dadurch bewerkstelligt werden, dass dieses mit zwei Buchsenhälften in Wechselwirkung tritt. Diese können nach Maßgabe einer Abstandsänderung zwischen den beiden Abschnitten aufeinander zu oder voneinander weg bewegbar sein und diese Bewegung auf das Federelement übertragen. Die Verwendung eines Federelements hat den Vorteil, dass dann, wenn dieses in einem Spannungszustand verbaut ist, d. h. vorgespannt ist, eine beliebige Verstellung gegen die oder mit der Federkraft bzw. Vorspannung möglich ist. In der Folge muss das zu verstellende Bauteil nicht geklemmt oder durch eine Kontermutter gekontert werden. Auch lässt sich unter Ausnutzung der Vorspannung des Federelements der Einstellbereich (Stellweg) vergrößern, insbesondere dann, wenn Tellerfedern verwendet werden. Ferner wird durch das verlagerbare Element, das beispielsweise als Schraube ausgeführt ist, die Steifigkeit des gesamten Systems erhöht.

Eine Weiterbildung sieht vor, dass die Positionieranordnung dazu ausgebildet ist, eine Neigung der Auflagereinheit um die zweite Achse einzustellen, die im Wesentlichen senkrecht zu der ersten und dritten Achse verläuft, und wobei insbesondere die Neigung über die erste Positioniereinheit einstellbar ist. Hierzu kann die erste Positioniereinheit derart angeordnet sein, dass eine hierüber erzeugte Positionsänderung in einer Kippbewegung und somit Neigung der Auflagereinheit resultiert. Dies kann zum Beispiel dadurch erreicht werden, dass die erste Positioniereinheit außerhalb eines geometrischen Zentrums und/oder Schwerpunktes der Auflagereinheit und/oder eines hiermit verbunden Kopplungsbereichs der Positionieranordnung angeordnet ist.

In Fällen, in denen die erste Positioniereinheit mehrere der vorstehend erläuterten Positionseinstelleinheiten umfasst, kann eine Neigung auch darüber erreichbar sein, dass die Positionseinstelleinheiten in unterschiedlicher Weise betätigt werden beziehungsweise unterschiedliche Positionierung entlang der ersten Achse einstellen. Zum Beispiel kann eine erste Positionseinstelleinheit derart betätigt werden, dass diese die Auflagereinheit und/oder einen hiermit verbunden Kopplungsbereich der Positionieranordnung in einer ersten Position entlang der ersten Achse anordnet, wohingegen eine zweite Positionseinstelleinheit derart betätigt wird, dass diese eine von der ersten Position verschiedenartige Positionierung entlang der ersten Achse vornimmt. Dies kann in einem Verkippen oder - anders ausgedrückt - einer Neigung der Auflagereinheit resultieren.

Gemäß einer Weiterbildung ist die Positionieranordnung dazu ausgebildet, eine Neigung (oder mit anderen Worten eine Verdrehung) der Auflagereinheit um die erste Achse einzustellen, und insbesondere wobei die Neigung über die zweite Positioniereinheit einstellbar ist. Mit anderen Worten kann die Positionieranordnung dazu ausgebildet sein, die Auflagereinheit um die erste Achse zu verdrehen oder relativ zu einer die erste Achse enthaltenden Ebene zu neigen. Dies kann ein gemeinsames Neigen beziehungsweise Verdrehen der ersten Positioniereinheit und der Auflagereinheit sowie eines etwaigen hiermit verbundenen Kopplungsbereiches einschließen.

Allgemein kann die zweite Positioniereinheit ein vorzugsweise plattenförmiges Kopplungselement umfassen, an dem die erste Positioniereinheit angeordnet ist. Das Kopplungselement kann über wenigstens ein verlagerbares Elemente (zum Beispiel in Form einer Stellschraube) entlang der zweiten Achse positionierbar sein. Ferner kann das verlagerbare Element (oder auch eine Mehrzahl hiervon) derart angeordnet sein, dass eine Verdrehung des Kopplungselements um die erste Achse ermöglicht wird. Gemäß einer Variante umfasst die erste Positioniereinheit wenigstens zwei und vorzugsweise vier verlagerbare Elemente, wobei jeweils zwei verlagerbare Elemente an gegenüberliegenden Seiten des Kopplungselements angeordnet sein können. Die verlagerbaren Elemente können beispielsweise derart verteilt sein, dass sie gemeinsam ein Rechteck aufspannen.

Allgemein kann das Kopplungselement im Wesentlichen schwimmend auf einem feststehenden Bereich der zweiten Positioniereinheit gelagert sein, wobei sich die verlagerbaren Elemente an dem feststehenden Bereich abstützen können. Über eine Variation der Verlagerungsbeträge dieser Elemente (zum Beispiel durch Variation von dessen Einschraubtiefen) kann das Kopplungselement relativ zu dem feststehenden Bereich entlang der zweiten Achse verlagert und/oder um die erste Achse verdreht werden. Eine Position des Kopplungselements relativ zu dem feststehenden Bereich kann über ein Festziehen der verlagerbaren Elemente und/oder über ein gesondertes Klemmelement erfolgen, das beispielsweise in Form einer Klemmschraube bereitgestellt sein kann.

Die Positionieranordnung kann ferner eine vierte Positioniereinheit zum Positionieren der Auflagereinheit entlang der zweiten Achse umfassen, wobei die zweite Achse im Wesentlichen senkrecht zu der ersten Achse und/oder der dritten Achse verläuft. Die vierte Positioniereinheit kann ferner dazu eingerichtet sein, die erste, zweite und dritte Positioniereinheit sowie die jeweils damit gekoppelten Elemente gemeinsam entlang der zweiten Achse zu positionieren. Umgekehrt kann vorgesehen sein, dass die weiteren Positioniereinheiten ihre Bewegungen nicht auf die vierte Positioniereinheit übertragen. Die Positioniereinheiten können somit allgemein eine (vorzugsweise offene) kinematische Kette bilden, deren Basisglied von der vierten Positioniereinheit gebildet wird.

Die vierte Positioniereinheit kann nach dem Beispiel der "zweiten Positionierungseinheit 16" des einleitend erwähnten Dokuments DE 10 2015 003 367 A1 ausgebildet sein.

Insbesondere wird auf die Figuren 4-6 und die Erläuterungen gemäß den Absätzen [0055-0065] dieses Dokuments verwiesen.

Die Erfindung betrifft ferner ein Verfahren zum Abstützen eines langgestreckten Werkstücks für das Bearbeiten mittels einer Werkzeugmaschine, wobei das Abstützen insbesondere mittels einer Vorrichtung nach einem der vorangehenden Aspekte erfolgen kann, wobei die Werkzeugmaschine eine Auflagereinheit umfasst, die mit dem zu bearbeitenden Werkstück in Kontakt bringbar ist, wobei die Auflagereinheit einen Kontaktbereich aufweist, mittels dem sie in Kontakt mit dem Werkstück bringbar ist und der in zumindest einen ersten und zweiten Kontaktabschnitt unterteilt ist, umfassend die Schritte:
a) Einspannen des Werkstücks in einer Einspanneinrichtung der Werkzeugmaschine, sodass sich dieses mit einer vorbestimmten freien Länge in einen Bearbeitungsbereich der Werkzeugmaschine hinein erstreckt;
b) Positionieren der Auflagereinheit relativ zu dem Werkstück mittels einer Positionieranordnung, und
c) Positionieren des zweiten Kontaktabschnitts der Auflagereinheit relativ zu dem ersten Kontaktabschnitt nach Maßgabe einer Außenkontur des zu bearbeitenden Werkstücks.

Die Außenkontur kann insbesondere einen Abschnitt mit variierenden Querschnittsabmessungen umfassen und/oder einen Abschnitt, der einen Übergang zwischen einem Werkstückhauptabschnitt und einem Spitzen- oder Endbereich einschließt. Dabei können der erste und zweite Kontaktabschnitt nach Maßgabe dieser spezifischen Abschnitte relativ zueinander verlagert werden. Das Positionieren in Schritt b) kann sich analog zu den vorstehenden Erläuterungen auf ein Positionieren der gesamten Auflagereinheit beziehen, also beispielsweise ein Positionieren der Auflagereinheit als solches im Raum. Das Verfahren kann ferner vorsehen, dass zumindest nach dem Ausführen der Schritte b) und/oder c) das Werkstück entlang zumindest einer Hälfte von dessen freier Länge abgestützt wird und insbesondere zumindest entlang zwei Dritteln, drei Vierteln oder vier Fünfteln von dessen freier Länge abgestützt wird.

Das Verfahren kann ferner jegliche weitere Schritte oder Merkmale umfassen, um sämtliche der vorstehend erläuterten Effekte und Wechselwirkungen zu erzielen. Dies kann insbesondere einen Schritt des Festklemmens des Werkstücks während der Bearbeitung betreffen, wobei das Festklemmen gemäß den vorstehend erläuterten Varianten erfolgen kann. Ferner kann das Verfahren einen Schritt des Bearbeitens des Werkstücks entlang zumindest einer Hälfte von dessen freier Länge und insbesondere zumindest entlang zwei Dritteln, drei Vierteln oder vier Fünfteln von dessen freier Länge umfassen. Das Bearbeiten kann dabei im Wesentlichen ohne parallele Änderungen der Position der Auflagereinheit erfolgen und/oder ohne eine parallele Betätigung der Positionieranordnung.

Die Erfindung wird im Folgenden ferner anhand der beiliegenden Figuren beispielhaft erläutert. Es stellen dar:
- Figur 1: eine perspektivische Ansicht einer erfindungsgemäßen Vorrichtung gemäß einem ersten Ausführungsbeispiel;
- Figur 2: eine Seitenansicht der Vorrichtung aus Figur 1;
- Figur 3: eine Detailansicht, die die dritte Positioniereinheit der Vorrichtung aus Figur 1 in einer Schnittansicht zeigt;
- Figur 4: eine perspektivische Ansicht analog zu Figur 1, bei der eine Klemmanordnung der Vorrichtung einen klemmaktiven Zustand einnimmt;
- Figur 5: eine weitere Ansicht der Vorrichtung aus Figur 4, um eine Funktionsweise der Klemmanordnung zu erläutern;
- Figur 6: eine Teilschnittansicht durch das plattenförmige Kopplungselement und dessen Stellschrauben zur Erläuterung der zweiten Positioniereinheit;
- Figur 7: eine perspektivische Ansicht einer weiteren Ausführungsform der erfindungsgemäßen Vorrichtung; und
- Figur 8: eine Detailansicht, die die dritte Positioniereinheit der Vorrichtung aus Figur 7 in einer Schnittansicht zeigt.

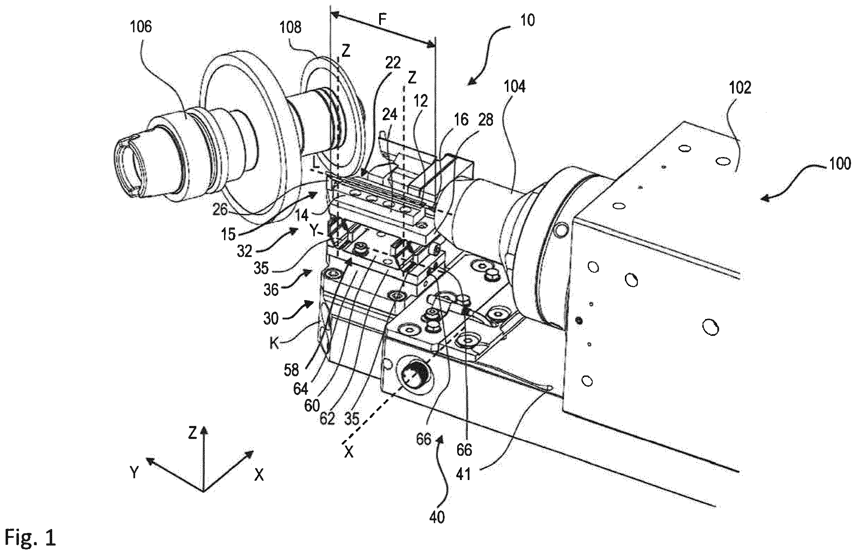

In Figur 1 ist eine Vorrichtung gemäß einem Ausführungsbeispiel der Erfindung gezeigt und allgemein mit 10 bezeichnet. Die Vorrichtung 10 ist an einer Werkzeugmaschine 100 angebracht. Von der Werkzeugmaschine 100 sind in Figur 1 eine erste Achse 102 oder - anders ausgedrückt - ein erster Achsantrieb 102 und eine Einspannvorrichtung 104 gezeigt. In der Einspannvorrichtung 104 ist ein Werkstück 12 eingespannt, das bearbeitet werden soll. Ferner ist eine zweite Achse 106 der Werkzeugmaschine 100 gezeigt, an der ein Werkzeug in Form einer Schleifscheibe 108 angebracht ist. Die Schleifscheibe 108 bearbeitet das Werkstück 12, das in der Einspannvorrichtung 104 der ersten Achse 102 der Werkzeugmaschine 100 eingespannt ist. Die Achsen 102 und 106 können derart angetrieben werden, dass die Schleifscheibe 108 und das Werkstück 12 rotieren. Die Achsen 102 und 106 können ferner relativ zueinander verlagert werden, dass mittels der Schleifscheibe 108 eine vorbestimmte Kontur an dem Werkstück 12 abgefahren und/oder ausgebildet werden kann. Weitere zu der Achse 106 gehörende Komponenten der Werkzeugmaschine 100 sind an sich bekannt und der Einfachheit halber weggelassen.

In Figur 1 ist ferner ein Koordinatensystem eingetragen, das die Lage dreier orthogonal zueinander verlaufender Raumachsen X, Y, Z zeigt. Dabei entspricht die Z-Achse einer Vertikalen und die X-und Y-Achse spannen eine horizontale Ebene auf. Im Folgenden werden verschiedene Positioniermöglichkeiten entlang spezifischer Achsen erläutert, die mittels der Vorrichtung 10 erzielbar sind. Sofern diese spezifischen Achsen parallel zu den Achsen X, Y, Z verlaufen oder mit diesen zusammenfallen, werden diese der Einfachheit halber ebenfalls mit einem entsprechenden X, Y, Z-Bezugszeichen versehen.

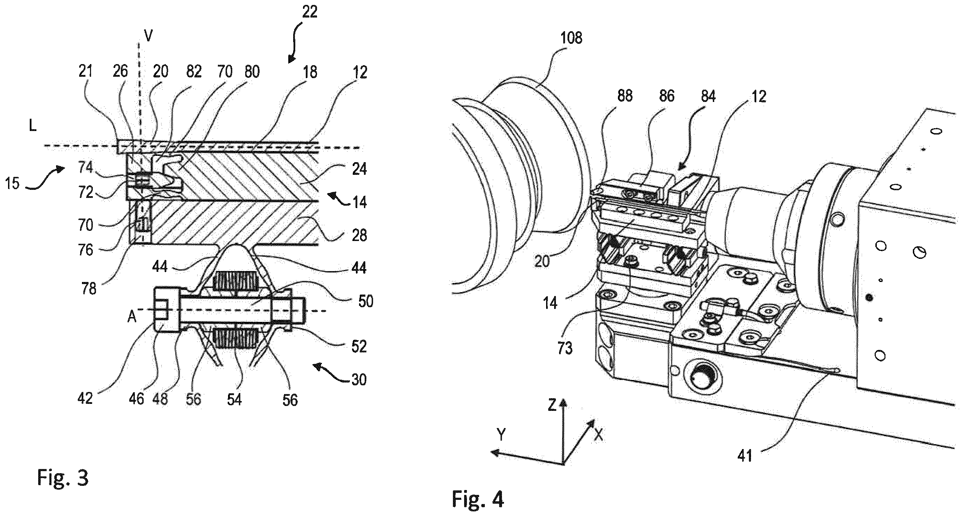

Die Vorrichtung 10 umfasst eine Auflagereinheit 14, die dazu ausgebildet ist, das Werkstück 12 gegen eine Bewegung in positiver und negativer Richtung entlang der X-Achse, sowie in negativer Richtung entlang der Z-Achse abzustützen. Zudem verhindert die Auflagereinheit 14 ein Durchbiegen des Werkstücks 12 um die X- und die Z-Achse und mindert das Auftreten von Vibrationen während dem Bearbeiten. Die Auflagereinheit 14 weist auch eine nachfolgend erläuterte dritte Positioniereinheit 15 (siehe Figur 3) auf, um das Abstützen an verschiedene Außenkonturen des Werkstücks 12 anpassen zu können.

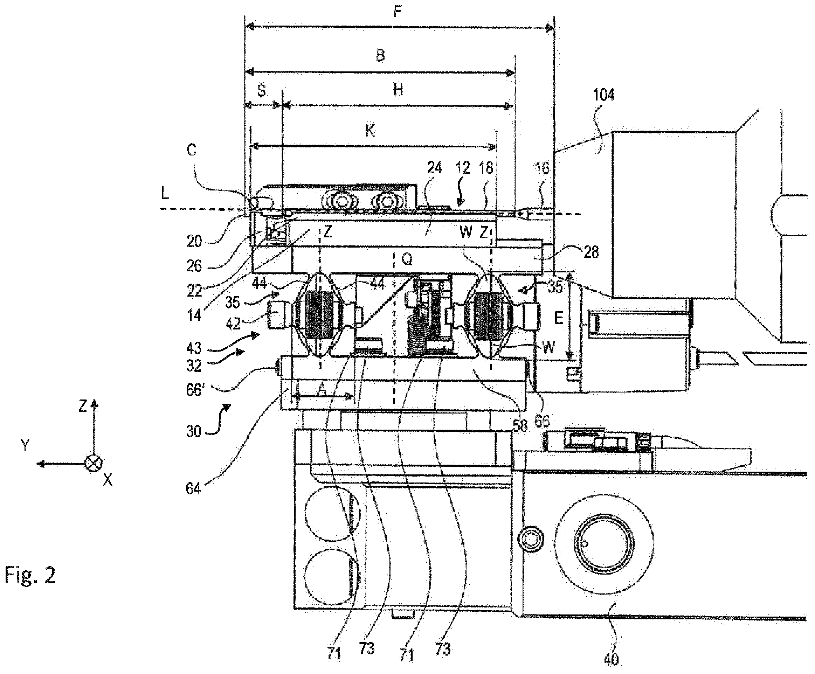

Das Werkstück 12 ist als ein langgestrecktes Bohrwerkzeug ausgebildet, das sich entlang einer Längsachse L erstreckt. Diese verläuft im gezeigten Fall parallel zu der Y-Achse. In Figur 1 erkennt man, dass sich das Werkstück 12 von der Einspannvorrichtung 104 mit einer freien Länge F in einen Bearbeitungsbereich der Werkzeugmaschine 100 hinein erstreckt. Wie ferner aus Figur 2 ersichtlich, weist das Werkstück 12 einen Schaftbereich 16 auf, der nicht zu bearbeiten ist und der größtenteils in der Einspannvorrichtung 104 aufgenommen ist. Einen Hauptanteil der freien Länge F des Werkstücks nimmt ein Bearbeitungsbereich B ein, entlang dem sich die Schneiden des Bohrers erstrecken (nicht gesondert dargestellt). Dieser Bearbeitungsbereich B soll im gezeigten Fall möglichst vollständig mittels der Schleifscheibe 108 bearbeitet werden.

In Figur 2 erkennt man ferner, dass das Werkstück einen Hauptabschnitt 18 umfasst, welcher den größten Anteil H an der Gesamtlänge des Bearbeitungsbereichs B einnimmt. Ferner weist das Werkstück 12 an seinem von der Einspannvorrichtung 104 abgewandten freien axialen Ende einen Spitzen- oder - anders ausgedrückt - einen Endbereich 20 auf. Dieser umfasst einen vergleichsweise geringen Anteil S an der Gesamtlänge des Bearbeitungsbereichs, der im gezeigten Fall ca. 1/6 der Länge H des Hauptabschnitt 18 beträgt.

Der Hauptabschnitt 18 ist zylindrisch ausgebildet und weist eine im Wesentlichen kreisförmige Außenkontur mit einem konstanten Durchmesser auf. Der Endabschnitt 20 ist hingegen kegelförmig ausgebildet und unterscheidet sich somit hinsichtlich der Form und der Querschnittsabmessungen von dem Hauptabschnitt 18.

In den Figuren 2 und 3 erkennt man auch die Auflagereinheit 14, die einen dem Werkstück 12 zugewandten Kontaktbereich 22 aufweist, der einen ersten und zweiten Kontaktabschnitt 24, 26 umfasst. Der Kontaktbereich 22 erstreckt sich über eine Länge K entlang der Werkstücklängsachse L, wobei die Länge K im Beispielsfall einen Anteil von mehr als ca. 4/5 der Gesamtlänge des Bearbeitungsbereichs B umfasst. Über den Kontaktbereich 22 steht die Auflagereinheit 14 mit dem Werkstück 12 in Kontakt, um dieses in der vorstehend erläuterten Weise abzustützen.

Im Bereich eines nachfolgend erläuterten Festkörpergelenks zwischen den Kontaktabschnitten 24, 26, das von elastisch deformierbaren Abschnitten 70 gebildet wird, steht der Kontaktbereich 22 jedoch abschnittsweise in keinem abstützwirksamen Kontakt mit dem Werkstück 12.

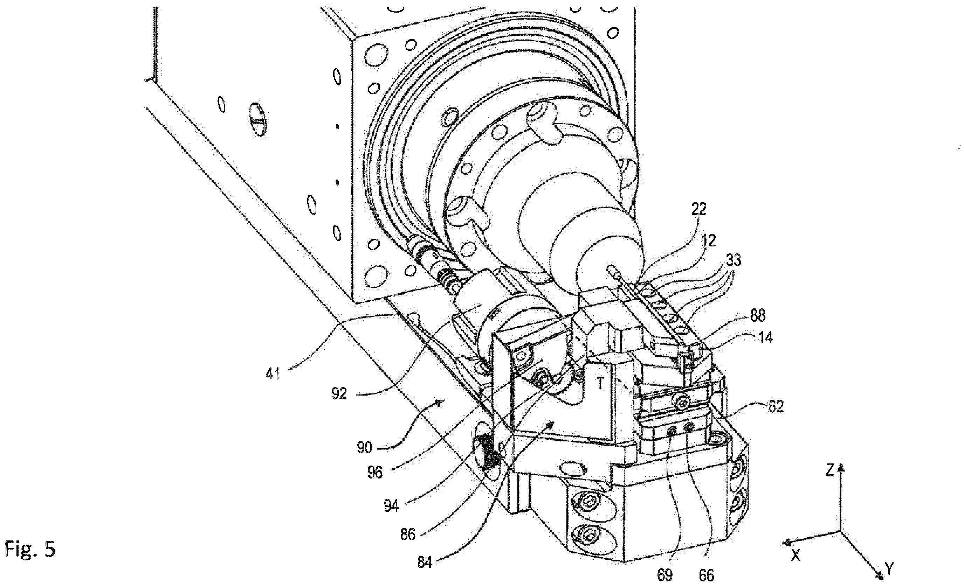

Zurückkommend auf Figur 1 erkennt man, dass der Kontaktbereich 22 der Auflagereinheit 14 eine dem Werkstück 12 zugewandte und sich entlang dessen Längsachse L erstreckende Ausnehmung umfasst. Das Werkstück 12 ist somit zumindest teilweise in dem Kontaktbereich 22 aufnehmbar (siehe auch weitere Darstellung gemäß Figur 5). In den gezeigten Fällen ist das Werkstück 12 jeweils in der Ausnehmung angeordnet, sodass diese größtenteils verdeckt ist. Allgemein ist die Ausnehmung in einem senkrecht zu der Werkstücklängsachse L verlaufenden Querschnitt betrachtet im Wesentlichen U- oder V-förmig ausgebildet, wobei eine Tiefe dieser U- oder V-Form bestimmt, in welchem Maße das Werkstück 12 in der Ausnehmung aufnehmbar ist und von dieser gestützt wird.

Beide Kontaktabschnitte 24, 26 bilden jeweils einen Abschnitt des Kontaktbereichs 22 sowie der darin vorgesehenen Ausnehmung zur Aufnahme des Werkstücks 12. In Figur 2 erkennt man, dass der zweite Kontaktabschnitt 26 sich entlang des Endabschnitts 20 des Werkstücks 12 erstreckt und dabei lediglich punktuell oder linienförmig in einem Bereich C hiermit in Kontakt steht. Der von dem zweiten Kontaktabschnitt 26 gebildete Ausnehmungsabschnitt weist somit eine vergleichsweise kleine axiale Länge auf. Der erste Kontaktabschnitt 24 erstreckt sich hingegen entlang des Hauptabschnitts 18 des Werkstücks 12 und weist eine vergleichsweise große Länge auf, die einen Großteil der Länge H des Hauptabschnitts 18 einnimmt.

Folglich ist der erste Kontaktabschnitt 24 näher zu der Einspannvorrichtung 104 angeordnet als der zweite Kontaktabschnitt 26, oder mit anderen Worten ist der zweite Kontaktabschnitt 26 von der Einspannvorrichtung 104 abgewandt und bildet einen entlang der Werkstücklängsachse L betrachtet axialen Endabschnitt der Auflagereinheit 14.

Im Folgenden werden die verschiedenen Positioniermöglichkeiten erläutert, die mittels der Vorrichtung 10 bereitgestellt werden können.

In Figur 1 erkennt man, dass die Auflagereinheit 14 an einem plattenförmigen Kopplungsbereich 28 einer Positionieranordnung 30 der Vorrichtung 10 angeordnet ist. Dies erfolgt über vier entlang der Werkstücklängsachse L angeordnete Verschraubungen 33 (siehe auch Figur 5). Die Positionieranordnung 30 umfasst eine erste Positioniereinheit 32, die dazu ausgebildet ist, die Auflagereinheit 14 sowie den damit verbundenen Kopplungsbereich 28 in positiver und auch negativer Richtung entlang einer ersten Achse Z zu bewegen, die parallel zu der vertikalen Raumachse Z verläuft. Hierfür weist die erste Positioniereinheit 32 zwei im Wesentlichen gleichartig ausgebildete Positionseinstelleinheiten 35 auf, die im Folgenden anhand von Figur 2 erläutert werden. Da die Positionseinstelleinheiten 35 jeweils eine Positioniermöglichkeit oder - anders ausgedrückt - einen Freiheitsgrad zur Bewegung entlang der ersten Achse Z bereitstellen, ist in Figur 1 für jedes dieser Elemente eine entsprechende erste Achse Z stichliniert angedeutet.

Die Positionieranordnung 30 umfasst ferner eine zweite Positioniereinheit 36, die ein Positionieren der Auflagereinheit 14 und des damit verbundenen Kopplungsbereichs 28 in einer von der X-Achse und der Y-Achse aufgespannten Ebene ermöglicht. Die X-Achse und die Y-Achse erstrecken sich parallel zu der X-Raumachse bzw. Y-Raumachse des gezeigten Koordinatensystems. Die Funktionsweise der zweiten Positioniereinheit 36 wird ebenfalls nachstehend noch näher erläutert. Man erkennt jedoch bereits, dass die erste und zweite Positioniereinheit 32, 36 im Sinne einer kinematische Kette derart angeordnet sind, dass eine Positionierung mittels der zweiten Positioniereinheit 36 auf die erste Positioniereinheit 32 übertragbar ist, nicht jedoch umgekehrt.

Schließlich umfasst die Positionieranordnung 30 eine vierte Positioniereinheit 40. Diese ermöglicht ein Positionieren der Auflagereinheit 14 um relativ große Distanzen entlang der Achse Y, die parallel zu der Y-Raumachse des gezeigten Koordinatensystems verläuft.

Ferner ist eine Feineinstellung entlang der Achse X vorgesehen, die durch Biegegelenke 41 ermöglicht wird.

Die vierte Positioniereinheit 40 ist analog zu der "zweiten Positionierungseinheit 16" des einleitend erwähnten Dokuments DE 10 2015 003 367 A1 ausgebildet, wobei auf die diesbezügliche Offenbarung dieses Dokuments explizit Bezug genommen wird. Insbesondere wird auf die Figuren 4-6 und die Erläuterungen gemäß den Absätzen [0055-0065] dieses Dokuments verwiesen. Die vierte Positioniereinheit 40 ist ferner dazu eingerichtet, die hierüber eingestellte Positionierung im Sinne einer kinematische Kette auch auf die zweite Positioniereinheit 36 und somit auch auf die damit gekoppelte erste Positioniereinheit 32 zu übertragen. Eine umgekehrte Übertragung der Positionierungen der ersten oder zweiten Positioniereinheit 32, 36 auf die vierte Positioniereinheit 40 ist hingegen nicht möglich.

Der Vollständigkeit halber ist zu erwähnen, dass sämtliche oder auch nur ausgewählte der im Kontext der vorliegenden Offenbarung beschriebenen ersten bis vierten Positioniereinheiten 15, 32, 36, 40 ein Positionieren in beide Richtungen ihrer jeweils zugeordneten Achsen X, Y, Z sowie zum Teil auch eine Winkeleinstellung um ausgewählte Achsen ermöglichen können. Dies ist auch in dem vorliegenden Ausführungsbeispiel der Fall.

Zusammengefasst ermöglicht die Positionieranordnung 30 über deren erste, zweite und vierte Positioniereinheit 32, 36, 40 ein Positionieren oder - anders ausgedrückt - ein Verstellen und Bewegen der Auflagereinheit 14 und des damit verbundenen Kopplungsbereiches 28 entlang sämtlicher Achsen X, Y, Z des gezeigten Koordinatensystems. Folglich kann die Auflagereinheit 14 in gewünschter Weise relativ zu dem Werkstück 12 positioniert und insbesondere damit in Kontakt gebracht werden. Ebenso kann die Auflagereinheit mit einer vorbestimmten Anlagekraft gegen das Werkstück 12 gedrängt werden, um ein zuverlässiges Abstützen zu gewährleisten.

Anhand von Figur 2 wird im Folgenden eine Funktionsweise der ersten Positioniereinheit 32 zum Positionieren entlang der Achse Z näher erläutert. Die erste Positioniereinheit 32 umfasst die bereits erwähnten und weitestgehend identisch ausgebildeten Positionseinstelleinheiten 35. Im Detail besteht der einzige Unterschied der Positionseinstelleinheiten 35 darin, dass diese an einer vertikalen Raumebene Q, die von der Z-und X-Achse des gezeigten Koordinatensystems aufgespannt wird, gespiegelt sind. Ihre nachfolgend erläuterten Stellschrauben 42 weisen daher entgegengesetzte Ausrichtungen auf. Aus Gründen der Übersichtlichkeit sind im Folgenden nicht sämtliche Bezugszeichen stets für beide der Positionseinstelleinheiten 35 eingetragen.

Die Positionseinstelleinheiten 35 umfassen jeweils einen elastisch deformierbaren Bereich 43, der ein Festkörpergelenk mit insgesamt vier deformierbaren Abschnitten bildet. Dieser wird also von vier einander gegenüberliegenden und elastisch deformierbaren Abschnitten 44 gebildet, die gemeinsam näherungsweise ein Parallelogramm in Form einer Raute aufspannen (siehe insbesondere Seitenansicht gemäß Figur 2). Der elastisch deformierbare Bereich 43 weist demnach eine erste Erstreckung E auf, die im gezeigten Fall entlang der ersten Achse Z verläuft. Ferner weisen die Abschnitte 44 auf halber Höhe der Erstreckung E beziehungsweise in einem mittleren Bereich des elastischen deformierbaren Bereichs 43 einen Abstand A voneinander auf (siehe Figur 2). Dieser verläuft orthogonal zu der Erstreckung E.

Jede Positionseinstelleinheit 35 umfasst ferner ein bereits erwähntes verlagerbares Element in Form einer Stellschraube 42. Ein Kopf 46 der Stellschraube 42 stützt sich dabei an einem Anlageflansch 48 eines ersten der beiden Abschnitte 44 ab. Ein Schaftbereich 50 der Stellschraube 42 erstreckt sich frei durch eine entsprechend größere Aufnahmeöffnung in dem Anlageflansch 48 und ist mit seinem Außengewinde in einen Eingriffsbereich 52, der ein Innengewinde umfasst, des gegenüberliegenden zweiten Abschnitts 44 eingeschraubt (siehe auch Schnittdarstellung gemäß Figur 3). Dabei liegen der Anlageflansch 48 und der Eingriffsbereich 52, die jeweils eine Aufnahmeöffnung für die Stellschraube 42 begrenzen, auf einer gemeinsamen Linie entlang des Abstandes A.

Schließlich ist in Figur 2 gezeigt, dass zwischen den einander gegenüberliegenden elastisch deformierbaren Abschnitten 44 jeweils eine vorgespannte Federanordnung in Form eines komprimierten Tellerfederpakets 54 angeordnet ist. Dies wird ferner aus der Schnittdarstellung gemäß Figur 3 deutlich, in der man erkennt, dass das Tellerfederpaket 54 auf dem Außenumfang zweier Buchsenhälften 56 angeordnet ist. Die Buchsenhälften 56 sind nach Maßgabe einer Variation des Abstands A gemeinsam mit den Abschnitten 44 voneinander weg und aufeinander zu bewegbar. Diese Bewegung wird auf das Tellerfederpaket 54 zu dessen Komprimierung oder Entspannung übertragen. Mit anderen Worten kann das Tellerfederpaket 54 in Abhängigkeit von seinem Komprimierungszustands Rückstellkräfte erzeugen, welche die Positionseinstelleinheiten 35 und insbesondere deren elastisch deformierbaren Abschnitte 44 unter eine definierte Vorspannung setzen. Dies bedeutet, dass das Tellerfederpaket 54 aufgrund seines Komprimierungszustands (Vorspannung) die einander gegenüberliegenden Abschnitte 44 auseinander spannt, sodass bei einem Herausschrauben der Stellschraube 42 aus der Positionseinstelleinheit 35 die Spreizung zwischen den gegenüberliegenden Abschnitten 44 unter der sich abbauenden Vorspannung des Tellerfederpakets 54 größer wird, womit sich der Kopplungsbereich 28 im Raum absenken lässt. Im Gegenzug bewirkt ein Hereinschrauben der Stellschraube 42 in die Positionseinstelleinheit 35 eine Verkleinerung der Spreizung zwischen den gegenüberliegenden Abschnitten 44, wobei die Vorspannung des Tellerfederpakets 54 zunimmt. Dadurch lässt sich der Kopplungsbereich 28 im Raum anheben. Insgesamt kann somit unter Ausnutzung des Komprimierungszustands des Tellerfederpakets 54 eine spielfreie Betätigung der Positionseinstelleinheiten 35 und somit eine spielfreie Positionierbarkeit der Auflagereinheit 14 entlang der ersten Achse Z in positiver und negativer Richtung erreicht werden.

Die Verwendung des Tellerfederpakets 54 unter Vorspannung hat den Vorteil, dass eine beliebige Verstellung gegen die oder mit der Federkraft bzw. Vorspannung möglich ist. In der Folge müssen nach einer Einstellung die Positionseinstelleinheiten 35 nicht fixiert werden, beispielsweise durch Klemmung oder Kontern. Auch lässt sich unter Ausnutzung der Vorspannung des Tellerfederpakets 54 der Einstellbereich (Stellweg) vergrößern. Ferner wird durch die Stellschraube 42 die Steifigkeit des gesamten Systems erhöht.

Eine Rotation der Stellschraube 42 über ein manuelles Verdrehen des Schraubenkopfes 46 bewirkt also, dass der Eingriffsbereich 52 und der Schaftbereich 48 relativ zueinander entlang der Linie des Abstandes A bewegt werden. Je nach Rotationsrichtung erfolgt dabei eine Vergrößerung oder eine Verkleinerung des Abstandes A unter einer elastischen Deformation der jeweils gegenüberliegenden Abschnitte 44. Im Ergebnis führt dies dazu, dass bei einer Vergrößerung des Abstandes A sich die Erstreckung E entlang der ersten Achse Z parallel dazu verringert. Dies ist darauf zurückzuführen, dass die Abschnitte 44 unter der Vorspannung des Tellerfederpakets 54 voneinander weg gedrängt werden und sich der von den Abschnitten 44 eingeschlossene Winkel W, welcher die erste Achse Z überspannt, in der jeweiligen Positionseinstelleinheit 35 vergrößert (siehe Figur 2). Folglich wird der Kopplungsbereich 28 und damit die Auflagereinheit 14 entlang der ersten Achse Z in Figur 2 nach unten beziehungsweise in negativer vertikaler Z-Richtung bewegt. Mit anderen Worten wird die Auflagereinheit 14 relativ zu dem Werkstück 12 abgesenkt.

Wird hingegen der Abstand A zwischen den elastisch deformierbaren Abschnitten 44 der Positionseinstelleinheiten 35 durch Einschrauben der Stellschraube 42 verringert, verkleinert sich auch der von den Abschnitten 44 entlang der ersten Achse Z eingeschlossene Winkel W der jeweiligen Positionseinstelleinheit 35, sodass sich die Erstreckung E entlang der ersten Achse Z vergrößert. Dies resultiert in einem Anheben der Auflagereinheit 14 in vertikaler Z-Richtung sowie relativ zu dem Werkstück 12.

Aufgrund des Vorsehens von zweier separater Positionseinstelleinheiten 35 besteht über die erste Positioniereinheit 32 die Möglichkeit, die Auflagereinheit 14 relativ zu einer horizontalen Ebene zu neigen. Diese Ebene wird von der Y- und X-Achse des gezeigten Koordinatensystems aufgespannt. Dies kann dadurch erreicht werden, dass über unterschiedliche Einschraubtiefen der Stellschrauben 42 voneinander abweichende Erstreckungen E der Positionseinstelleinheiten 35 entlang der ersten Achse Z eingestellt werden. Dies resultiert in einem Neigen oder - anders ausgedrückt - einem Verkippen der Auflagereinheit 14 um die dritte Achse X.

Würde man in Figur 2 beispielsweise die Erstreckung E der linken Positionseinstelleinheit 35 entlang der ersten Achse Z größer wählen, als die entsprechende Erstreckung E der in Figur 2 rechten Positionseinstelleinheit 35, würde auch ein in Figur 2 linker Bereich der Auflagereinheit 14 gegenüber einem in Figur 2 rechten Bereich angehoben werden. Dies entspricht dem erläuterten Neigen beziehungsweise Verkippen um die X-Achse sowie relativ zu der horizontalen Ebene.

Mit Bezug auf die Figuren 1, 2 und 6 wird im Folgenden die Funktionsweise der zweiten Positioniereinheit 36 erläutert. Die zweite Positioniereinheit 36 umfasst ein plattenförmiges Kopplungselement 58. Dieses weist im Bereich nahe seiner schmalen Stirnseiten jeweils eine in Richtung der Z-Achse verlaufende bohrlochartige Ausnehmungen 59, 59' auf. Das Kopplungselement 58 ist somit mit einer nach oben weisenden Oberfläche 60 ausgebildet, die dem Betrachter in Figur 1 zugewandt und die von einem umlaufenden Rand 62 umgeben ist.

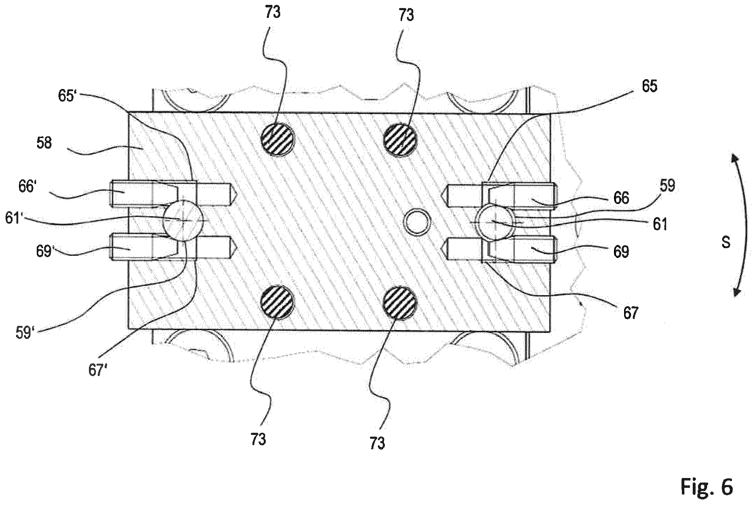

Durch die Ausnehmungen 59, 59' erstrecken sich jeweils ein Bolzen 61, 61' , der sich ausgehend von einem Sockelelement 64 in Richtung der Z-Achse erstreckt. Der Bolzen 61' ist in der korrespondierenden Ausnehmung 59' spielarm aufgenommen, wohingegen der Bolzen 61 in der korrespondierenden Ausnehmung 59 mit einem geringen Radialspiel, beispielsweise von 1 - 3 mm aufgenommen ist. Das Sockelelement 64 ist feststehend mit einem weiteren Bereich K der Vorrichtung 10 verbunden (siehe Figur 1), der über die vierte Positioniereinheit 40 entlang der dritten Achse X positionierbar ist. Die beiden Bolzen 61, 61' sind in dem Sockelelements 64 festgelegt und bilden somit einen (innerhalb der Positioniereinheit 36) feststehenden Bereich, wobei das Kopplungselement 58 um den Bolzen 61' herum spielarm drehbar gelagert ist, und im Rahmen des Radialspiels um den Bolzen 61 herum verschwenkt werden kann, wie durch den Doppelpfeil S in Figur 6 gezeigt. In dem Kopplungselement 58 sind an seinen beiden in Y-Richtung weisenden, einander gegenüberliegenden Stirnseiten jeweils zwei seitlich in die Ausnehmungen 59 bzw. 59' hineinragende und diese schneidende Gewindebohrungen 65, 67 bzw. 65', 67' vorgesehen, in die v Stellschrauben 66, 69 bzw. 66', 69' eingeschraubt sind (siehe Figur 6 in Zusammenschau).

Die Stellschrauben 66, 69 bzw. 66', 69' weisen jeweils ein von außen zugängliches Ende auf, das auch in den Figuren 1, 5 und 6 zu erkennen ist und über das ein Bediener eine Einschraubtiefe verändern kann. Mit ihrem in Figur 6 erkennbaren Ende können die Stellschrauben 66, 69 bzw. 66', 69' jeweils in Anlage mit dem Bolzen 61, 61' des Sockelelements 64 gebracht werden. Die Stellschrauben 66, 69 bzw. 66', 69' sind an ihren eingeschraubten Enden jeweils mit einem Konus versehen, der mit dem zugeordneten Bolzen 61, 61' in Anlage bringbar ist.

Ferner sind Klemmschrauben 73 vorgesehen, die sich durch Durchgangsbohrungen in dem plattenförmigen Kopplungselement 58 hindurch erstrecken und in Gewindebohrungen in dem Sockelelement 64 eingeschraubt sind, wobei sich die Klemmschrauben 73 mit ihren Schraubenköpfen über Tellerfedern 71 in einem leicht gelösten Zustand unter Vorspannung auf der Oberfläche 60 des plattenförmigen Kopplungselements 58 abstützen (siehe beispielsweise Figur 2).

Zur Einstellung der zweiten Positioniereinheit 36 kann gemäß der Erfindung wie folgt vorgegangen werden:
- Zunächst wird ein Ausgangszustand eingestellt, in dem die Klemmschrauben 73 leicht gelöst sind und das plattenförmige Kopplungselement 58 über die Tellerfedern 71 leicht, jedoch relativ verschiebbar auf das Sockelelement 64 drücken.
- Ferner haben die Stellschrauben 66, 69 bzw. 66', 69' in diesem Ausgangszustand keinen Kontakt zu den Bolzen 61, 61'.
- Das plattenförmige Kopplungselement 58 wird um den in Richtung der Z-Achse verlaufenden Bolzen 61' relativ zu dem Sockelelement 64 in eine gewünschte Solllage verschwenkt.
- Diese Verschwenkung kann zunächst im Rahmen einer Grobeinstellung manuell durchgeführt werden.
- Die Stellschrauben 66', 69' werden zur Reduzierung des Spiels am Bolzen 61' eingeschraubt.
- Eine Feineinstellung erfolgt über eine geeignete Wahl der Einschraubtiefe der Stellschrauben 66 und 69 am Bolzen 61.
- Die Konizitäten der Stellschrauben 66, 69 und 66', 69' begünstigen eine exakte Feineinstellung.
- Ist die gewünschte Solllage auch im Rahmen der Feineinstellung erreicht, so kann diese durch hinreichend tiefes Einschrauben der Stellschrauben 66, 69 und 66', 69' fixiert werden, wobei diese in festlegende Anlage mit den Bolzen 61 und 61' gelangen.
- Sodann werden die Klemmschrauben 73 fixiert.

Diese Einstellung ist reversibel und lässt sich beliebig oft wiederholen.

Im Folgenden wird anhand von Figur 3 eine Funktionsweise der dritten Positioniereinheit 15 der Auflagereinheit 14 erläutert. Figur 3 stellt eine Detailansicht eines in Figur 2 linken axialen Endbereichs der Auflagereinheit 14 umfassend den zweiten Kontaktabschnitt 26 dar. Dabei handelt es sich bei Figur 3 um eine die Werkstücklängsachse L enthaltende Schnittansicht.

Man erkennt zunächst wiederum das Werkstück 12 sowie dessen zylindrischen Hauptabschnitt, der im Bereich des zweiten Kontaktabschnitts 26 der Auflagereinheit 14 in den Endabschnitt 20 übergeht. Dabei verdeutlichen sich noch einmal die abweichenden Querschnittsabmessungen und Querschnittsformen des Haupt- und Endabschnitts 18, 20. Zusätzlich erkennt man auch die Position eines axialen Stirnflächenbereichs 21 des Werkstücks 12.

Ferner erkennt man, dass der erste Kontaktabschnitt 24 und der zweite Kontaktabschnitt 26 über elastisch deformierbare Abschnitte 70 miteinander verbunden und axial voneinander beabstandet sind. Die deformierbaren Abschnitte 70 bilden ein Festkörpergelenk, das an dem Werkstück 12 anliegt, dieses jedoch nicht während der Bearbeitung abstützwirksam kontaktiert. Genauer gesagt sind der erste und zweite Kontaktabschnitt 24, 26 einstückig ausgebildet, weisen jedoch im Bereich des Festkörpergelenks eine geringere Materialstärke in Form der elastisch deformierbaren Abschnitte 70 auf. Bei einer elastischen Deformation dieser Abschnitte 70 sind der erste und der zweite Kontaktabschnitt 24, 26 somit entlang einer vorbestimmten Achse V relativ zueinander bewegbar. Dies betrifft im Wesentlichen eine Bewegung entlang der ersten Achse Z der ersten Positioniereinheit 32 oder - anders ausgedrückt - entlang der vertikalen Z-Achse des in Figur 1 gezeigten Koordinatensystems. Aufgrund der nachfolgend erläuterten Krafteinleitung mittels einer Stellschraube 72 geht die erläuterte Bewegung aber auch mit einer Winkeländerung zumindest zwischen den jeweiligen Werkzeug-Kontaktflächen der beiden Kontaktabschnitte 24, 26 einher.

Genauer gesagt kann der zweite Kontaktabschnitt 26 relativ zu dem erste Kontaktabschnitt 24 entlang der vorbestimmten Achse V angehoben oder abgesenkt werden, wobei der erste Kontaktabschnitt 24 über die in Figur 5 gezeigten Schraubverbindungen 33 feststehend mit dem Kopplungsbereich 28 der Positionieranordnung 30 verbunden ist. Um diese Änderung der Relativanordnung der Kontaktabschnitt der 24, 26 zu erreichen, ist ferner ein verlagerbares Element in Form einer Stellschraube 72 (Figur 3) vorgesehen. Die Stellschraube 72 und das Festkörpergelenk, umfassend die elastisch deformierbaren Abschnitte 70, bilden jeweils einen Bestandteil der dritten Positioniereinheit 15.

Im Detail ist die Stellschraube 72 in eine Gewindebohrung 74 in dem Kontaktabschnitt 26 der Positionieranordnung 30 eingesetzt, wobei sich die Gewindebohrung 74 orthogonal zu der vorbestimmten Achse V erstreckt. Die Stellschraube 72 ist an ihrem eingeschraubten Ende mit einem Konus versehen, der mit einem lagestabilen keilförmigen Vorsprung 80 innerhalb des Kontaktabschnitts 26 zusammenwirkt, wobei sich dieser Vorsprung 80 in einer Ausnehmung 82 im Wesentlichen entlang der Werkstücklängsachse L (siehe auch Figur 2) erstreckt. Durch Ändern der Einschraubtiefe der weiteren Stellschraube 72 in der Gewindebohrung 74 werden über das Wechselwirken der keilförmigen Flächen des Konus der Stellschraube 72 und des Vorsprung 80 Stellkräfte erzeugt, die den zweiten Kontaktabschnitt 26 entlang der Achse V verlagern. Je weiter die Stellschraube 72 in die Gewindebohrung 74 eingeschraubt wird, desto weiter verlagert sich der zweite Kontaktabschnitt 26 in Figur 3 gegen eine elastische Deformation der Abschnitte 70 nach unten. Wird die Stellschraube 72 hingegen aus der Gewindebohrung 74 heraus geschraubt, so können sich die elastisch deformierbaren Abschnitte 70 entspannen und der zweite Kontaktabschnitt 26 bewegt sich in Figur 3 nach oben. Dies gewährleistet eine spielfreie Positionierbarkeit des zweiten Kontaktabschnitts 26 über die Stellschraube 72.

Über ein Ändern der Einschraubtiefe der Stellschraube 72 in der Gewindebohrung 74 kann also eine entlang der vorbestimmten Achse V wirkende Druckkraft, die in Figur 3 nach unten wirkt, verstärkt oder verringert werden. Darüber kann eine Relativposition des zweiten Kontaktabschnitts 26 relativ zu dem ersten Kontaktabschnitt 24 geändert werden, wobei der zweite Kontaktabschnitt 26 in der vorstehend erläuterten Weise unter einer Deformation der Abschnitte 70 relativ zu dem feststehenden ersten Kontaktabschnitt 24 entlang der vorbestimmten Achse V angehoben oder abgesenkt wird.

Ferner erkennt man in Figur 3 eine Feststellschraube 76, die in eine Gewindebohrung 78 eingeschraubt ist und die als Anschlag für den zweiten Kontaktabschnitt 26 dient. Wurde über die Stellschraube 72 gemäß vorstehender Beschreibung die gewünschte Höhe des zweiten Kontaktabschnitts 26 bezüglich des Werkstücks 12 eingestellt, um dieses hinreichend zu stützen, so kann die Position des zweiten Kontaktabschnitts 26 über die Feststellschraube 76 festgelegt werden.

Alternativ ist es auch möglich, aus einem entspannten Zustand der deformierbaren Abschnitte 70 und der zugehörigen Position des zweiten Kontaktabschnitts 26 bei gelöster Schraube 74 eine Verstellung des zweiten Kontaktabschnitts 26 nach oben durch Einschrauben der Feststellschraube 76 zu erzielen und diese Position dann durch anschließendes Einschrauben der Stellschraube 72 zu fixieren.

In Zusammenschau erkennt man, dass der Kontaktbereich 22 über die Möglichkeit des Änderns der Relativanordnung von erstem und zweitem Kontaktabschnitt 24, 26 an eine entlang der Längsachse L variierende Außenkontur des Werkstücks 12 anpassbar ist. Dies betrifft insbesondere ein Anpassen an die vorstehend erläuterten unterschiedlichen Querschnittsabmessungen und -formen zwischen dem Endabschnitt 20 und dem Hauptabschnitt 18 des Werkstücks 12.

Ferner erkennt man, dass die dritte Positioniereinheit 15 unabhängig von den weiteren Positioniereinheiten 32, 36, 40 der Positionieranordnung 30 betätigbar ist. Somit kann die Auflagereinheit 14 sozusagen als solches über die Positionieranordnung 30 im Raum sowie relativ zu dem Werkstück 12 positioniert werden. Mittels der dritten Positioniereinheit 15 wird jedoch wenigstens ein weiterer Freiheitsgrad innerhalb der Auflagereinheit 14 bereitgestellt, über den diese an die individuellen Gegebenheiten des zu bearbeitenden Werkstücks 12 anpassbar ist.

Abschließend wird anhand der Figuren 4 und 5 eine Klemmanordnung 84 der Vorrichtung 10 erläutert. Die Klemmanordnung 84 hat allgemein die Aufgabe, das Werkstück 12 gegen die Auflagereinheit 14 zu verklemmen, um eine möglichst präzise und vibrationsfreie Bearbeitung durch die Schleifscheibe 108 zu ermöglichen. Dies betrifft insbesondere das Bearbeiten der axialen Stirnfläche 21 des Werkstücks 12, wie anhand von Figur 3 erläutert. Wird das Werkstück 12 in diesem Bereich bearbeitet, wird die Klemmanordnung 84 selektiv aktiviert, um entsprechende Klemmkräfte zu erzeugen. Werden hingegen andere Werkstückabschnitte bearbeitet, insbesondere die Mantelfläche des Endabschnitts 20 abseits der axialen Stirnfläche 21, nimmt die Klemmanordnung 84 einen klemmkraftfreien inaktiven Zustand ein. Hierdurch sollen Störkonturen in dem Arbeitsbereich der Schleifscheibe 108 vermieden werden.

Die Klemmanordnung 84 umfasst eine Klemmeinheit 86, die auch als Niederhalter bezeichnet werden kann. Die Klemmeinheit 86 umfasst einen Klemmabschnitt 88 in Form eines Stifts, der in Anlage mit einer in Figur 5 oberen Seite des Werkstücks 12 bringbar ist, um darüber die gewünschten Klemmkräfte einzuleiten.

Hierzu ist die Klemmeinheit 86 um eine in Figur 5 gezeigte Rotationsachse T verschwenkbar. Das Verschwenken erfolgt über eine Antriebseinheit 90, umfassend einen Motor 92 sowie ein Stirnradgetriebe 94. Das Stirnradgetriebe 94 überträgt über einen nicht näher dargestellten Umlenkmechanismus 96 eine Drehbewegung der Ausgangswelle des Motors 92 in eine entsprechende Verschwenkbewegung der Klemmeinheit 86, sodass der Kontaktabschnitt selektiv in Anlage mit dem Werkstück 12 bringbar oder von diesem abhebbar ist.

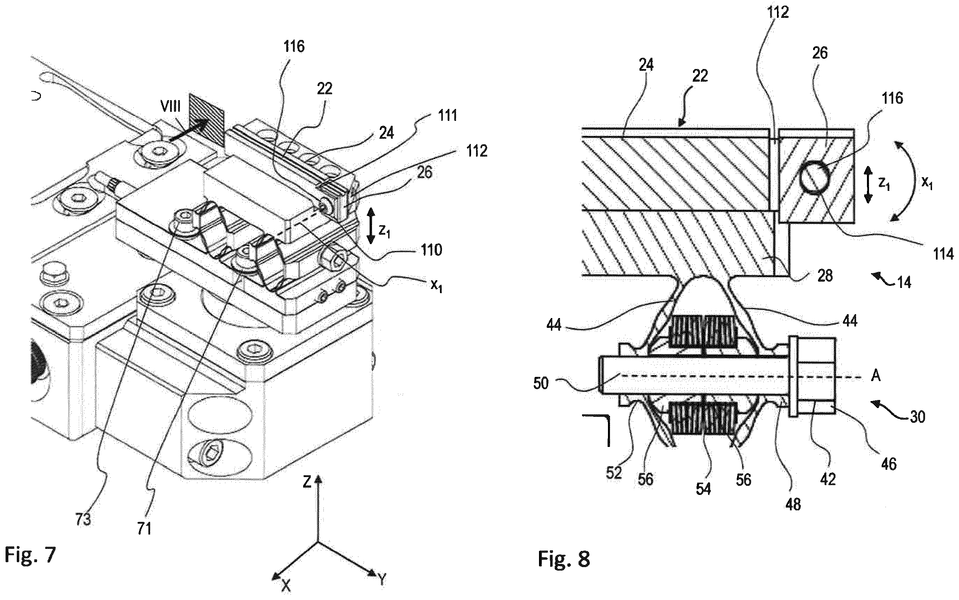

Figuren 7 und 8 zeigen eine weitere Ausführungsform der vorliegenden Erfindung. Wiederum werden für gleichartige Komponenten dieselben Bezugszeichen verwendet, wie vorangehend bei der Beschreibung der anderen Ausführungsformen.

Bei der Ausführungsform gemäß Figur 7 erkennt man, dass die Auflagereinheit 14 den Kontaktbereich 22 aufweist, der sich in den ersten Kontaktabschnitt 24 und den zweiten Kontaktabschnitt 26 unterteilt. Beide Kontaktabschnitte 24, 26 sind jeweils mit der in Längsrichtung in der Figur entlang der Y-Achse verlaufenden Ausnehmung oder Stütznut an ihrer Oberseite ausgebildet, in der ein Werkstück aufgenommen werden kann.

Der erste Kontaktabschnitt 24 weist an seiner in Figur 8 nach rechts weisenden Vorderseite zwei laschenförmige Vorsprünge 110, 112 auf, zwischen denen sich ein Zwischenraum ausbildet. In diesem Zwischenraum ist der zweite Kontaktabschnitt 26 in Form eines massiven Metallkörpers unter leichter Vorspannung aufgenommen, d. h. eingeklemmt jedoch darin manuell verschiebbar. Die Vorspannung wird dadurch erreicht, dass der laschenförmige Vorsprung 110 über ein Biegegelenk 111 an dem ersten Kontaktabschnitt 24 angeformt ist. Durch die beiden laschenförmigen Vorsprünge 110,112 erstrecken sich in Richtung der X-Achse zueinander fluchtende Bohrungen, wobei die Bohrung im laschenförmigen Vorsprung 110 eine gewindefreie Durchgangsbohrung ist und wobei die korrespondierende fluchtende Bohrung im laschenförmigen Vorsprung 112 eine Gewindebohrung ist.

Wie man in der Schnittdarstellung gemäß Figur 8 erkennt, deren Schnittebene sich in Figur 7 entlang der von den Achsen Y und Z aufgespannten Schnittebene VIII durch die Mitte des ersten und zweiten Kontaktabschnitts 24, 26 erstreckt, weist der zweite Kontaktabschnitt 26 ein Langloch 114 auf.

Wird, wie in Figur 7 gezeigt, durch die beiden fluchtenden Bohrungen in den beiden laschenförmigen Vorsprüngen 110, 112 eine Schraube 116 lose eingeschraubt, sodass diese sich durch das Langloch 114 erstreckt, so lässt sich der zweite Kontaktabschnitt 26 entlang des Pfeils z₁ (Figur 7 und 8) zwischen den beiden laschenförmigen Vorsprüngen 110 und 112 unter Überwindung der geringen Klemmkräfte manuell in vertikaler Richtung (Z-Achse) verschieben und auch um die Längsachse x₁ der Schraube 116 herum verschwenken. Wird die gewünschte Solllage für den zweite Kontaktabschnitt 26 erreicht, so kann die Schraube 116 festgezogen werden, um so den ersten Kontaktabschnitt 24 zwischen den beiden Vorsprüngen 110 und 112 festzuklemmen.

Mit dieser Ausführungsform gemäß Figuren 7 und 8 ist es durch einfache und mechanisch leicht handhabbare Mittel möglich, die Relativlage der beiden Kontaktabschnitte 24 und 26 zueinander nach Maßgabe des zu bearbeitenden Werkstücks einzustellen und in der gewünschte Solllage und Unterstützung für die Werkstückbearbeitung festzulegen.

## Patentansprüche

1. Vorrichtung (10) zum Abstützen eines von einer Werkzeugmaschine (100) zu bearbeitenden Werkstücks (12), umfassend:
- eine Auflagereinheit (14), die mit dem zu bearbeitenden Werkstück (12) in Kontakt bringbar ist, und
- eine Positionieranordnung (30) zum Positionieren der Auflagereinheit (14),
wobei die Positionieranordnung (30) wenigstens eine erste Positioniereinheit (32) zum Positionieren der Auflagereinheit (14) entlang zumindest einer ersten Achse (Z) und wenigstens eine zweite Positioniereinheit (36) zum Positionieren der Auflagereinheit (14) in einer von einer zweiten und dritten Achse aufgespannten Ebene (X, Y) umfasst, wobei die erste Achse (Z), die zweite Achse (X) und die dritte Achse (Y) im Wesentlichen senkrecht zueinander verlaufen,
**dadurch gekennzeichnet, dass** die Auflagereinheit (14) einen Kontaktbereich (22) aufweist, der sich in Richtung einer Werkstücklängsachse (L) des zu bearbeitenden Werkstücks (12) erstreckt, wobei die Auflagereinheit (14) über den Kontaktbereich (22) in Kontakt mit dem Werkstück (12) bringbar ist, und wobei der Kontaktbereich (22) in Richtung der Werkstücklängsachse (L) in zumindest einen ersten und einen zweiten Kontaktabschnitt (24, 26) unterteilt ist, und
dass die Auflagereinheit (14) eine dritte Positioniereinheit (15) umfasst, die dazu ausgebildet ist, eine Relativanordnung zwischen dem ersten und dem zweiten Kontaktabschnitt (24, 26) zu ändern.

2. Vorrichtung (10) nach Anspruch 1,
wobei die dritte Positioniereinheit (15) unabhängig von der ersten und zweiten Positioniereinheit (32, 36) der Positionieranordnung (30) betätigbar ist.

3. Vorrichtung (10) nach Anspruch 1 oder 2,
wobei die Auflagereinheit (14) dazu ausgebildet ist, das zu bearbeitende Werkstück (12) zumindest entlang der Hälfte einer zu bearbeitenden Länge (B) abzustützen.

4. Vorrichtung (10) nach einem der vorangehenden Ansprüche,
wobei die dritte Positioniereinheit (15) dazu eingerichtet, eine Relativanordnung des ersten und zweiten Kontaktabschnitts (24, 26) entlang wenigstens einer vorbestimmten Achse (V) zu ändern, wobei insbesondere die vorbestimmte Achse (V) im Wesentlichen parallel zu der ersten Achse (Z) verläuft.

5. Vorrichtung (10) nach Anspruch 4,
wobei die dritte Positioniereinheit (15) wenigstens ein, entlang einer vorbestimmten Richtung vorzugsweise geführt, verlagerbares Element (72) umfasst, das dazu ausgebildet ist, den ersten oder den zweiten Kontaktabschnitt (24, 26) in eine definierte Richtung entlang der vorbestimmten Achse (V) zu drängen.

6. Vorrichtung (10) nach einem der vorangehenden Ansprüche,
wobei die dritte Positioniereinheit (15) wenigstens einen elastisch deformierbaren Abschnitt (70) umfasst und dazu ausgebildet ist, die Relativanordnung des ersten und zweiten Kontaktabschnitts (24, 26) unter einer elastischen Deformation des elastisch deformierbaren Abschnitts (70) zu ändern.

7. Vorrichtung (10) nach einem der vorangehenden Ansprüche,
wobei die dritte Positioniereinheit (15) Mittel (110, 112, 116) vorsieht, um den ersten oder den zweiten Kontaktabschnitt (24, 26) in einer gewünschten Solllage relativ zueinander zu fixieren.

8. Vorrichtung (10) nach einem der vorangehenden Ansprüche,
wobei der erste Kontaktabschnitt (24) und der zweite Kontaktabschnitt (26) voneinander verschiedene Längen aufweisen und/oder wobei der erste Kontaktabschnitt (24) näher an einer Werkstückeinspannung (104) der Werkzeugmaschine (100) positionierbar ist als der zweite Kontaktabschnitt (26).

9. Vorrichtung (10) nach einem der vorangehenden Ansprüche,
wobei die Vorrichtung eine Klemmanordnung (84) umfasst, die dazu ausgebildet ist, das zu bearbeitende Werkstück (12) festzuklemmen, während dieses von der Auflagereinheit (14) abgestützt wird.

10. Vorrichtung (10) nach Anspruch 9,
wobei die Klemmanordnung (84) zum Festklemmen des Werkstücks (12) dazu ausgebildet ist, mit einem Abschnitt des zu bearbeitenden Werkstücks (12) zu wechselwirken, der nahe oder im Bereich des zweiten Kontaktabschnitts (26) angeordnet ist.

11. Vorrichtung (10) nach einem der vorangehenden Ansprüche,
wobei die Positionieranordnung (30) einen Kopplungsbereich (28) umfasst, an dem die Auflagereinheit (14) anordenbar ist, wobei der Kopplungsbereich (28) nach Maßgabe einer Positionierung der ersten und zweiten Positioniereinheit (32, 36) positionierbar ist.

12. Vorrichtung (10) nach einem der vorangehenden Ansprüche,
wobei die erste Positioniereinheit (32) wenigstens eine erste Positionseinstelleinheit (35) umfasst, die einen elastisch deformierbaren Bereich (43) und/oder wenigstens ein Festkörpergelenk umfasst.

13. Vorrichtung (10) nach einem der vorangehenden Ansprüche,
wobei die Positionieranordnung (30) dazu ausgebildet ist, eine Neigung der Auflagereinheit (14) um die zweite Achse (X) einzustellen, die im Wesentlichen senkrecht zu der ersten und dritten Achse (Z, Y) verläuft, und insbesondere wobei die Neigung über die erste Positioniereinheit (32) einstellbar ist.

14. Vorrichtung (10) nach einem der vorangehenden Ansprüche,
wobei die Positionieranordnung (30) dazu ausgebildet ist, eine Neigung der Auflagereinheit (14) um die erste Achse (Z) einzustellen, und wobei insbesondere die Neigung über die zweite Positioniereinheit (36) einstellbar ist.

15. Vorrichtung (10) nach einem der vorangehenden Ansprüche,
wobei die Positionieranordnung (30) eine vierte Positioniereinheit (40) zum Positionieren der Auflagereinheit (14) entlang der zweiten Achse (X) umfasst, wobei die zweite Achse (X) im Wesentlichen senkrecht zu der ersten Achse (Z) und/oder der dritten Achse (Y) verläuft.

16. Verfahren zum Abstützen eines langgestreckten Werkstücks (12) für das Bearbeiten mittels einer Werkzeugmaschine (100), wobei das Abstützen insbesondere mittels einer Vorrichtung (10) nach einem der vorangehenden Ansprüche erfolgt,
wobei die Werkzeugmaschine (100) eine Auflagereinheit (14) umfasst, die mit dem zu bearbeitenden Werkstück (12) in Kontakt bringbar ist,
wobei die Auflagereinheit (14) einen Kontaktbereich (22) aufweist, der sich in Richtung einer Werkstücklängsachse (L) des zu bearbeitenden Werkstücks (12) erstreckt, wobei die Auflagereinheit (14) über den Kontaktbereich (22) in Kontakt mit dem Werkstück (12) bringbar ist und wobei der Kontaktbereich (22) in zumindest einen ersten und zweiten Kontaktabschnitt (24, 26) in Richtung der Werkstücklängsachse (L) unterteilt ist,
umfassend die Schritte:
a) Einspannen des Werkstücks (12) in einer Einspanneinrichtung (104) der Werkzeugmaschine (100), sodass sich dieses mit einer vorbestimmten freien Länge (F) in einen Bearbeitungsbereich der Werkzeugmaschine (100) hinein erstreckt;
b) Positionieren der Auflagereinheit (14) relativ zu dem Werkstück mittels einer Positionieranordnung (30), und
c) Positionieren des zweiten Kontaktabschnitts (26) der Auflagereinheit (14) relativ zu dem ersten Kontaktabschnitt (24) nach Maßgabe einer Außenkontur des zu bearbeitenden Werkstücks (12).

## Claims

1. A device (10) for supporting a workpiece (12) to be machined by a machine tool (100), comprising:
- a support unit (14) which can be brought into contact with the workpiece (12) to be machined, and
- a positioning arrangement (30) for positioning the support unit (14),
wherein the positioning arrangement (30) comprises at least one first positioning unit (32) for positioning the support unit (14) along at least one first axis (Z) and at least one second positioning unit (36) for positioning the support unit (14) in a plane (X, Y) spanned by a second and third axis, wherein the first axis (Z), the second axis (X) and the third axis (Y) are substantially perpendicular to one another,
**characterized in that** the support unit (14) has a contact area (22) extending in the direction of a longitudinal workpiece axis (L) of the workpiece (12) to be machined, wherein the support unit (14) can be brought into contact with the workpiece (12) via the contact area (22), and wherein the contact area (22) is subdivided into at least one first and one second contact portion (24, 26) in the direction of the longitudinal workpiece axis (L), and
**in that** the support unit (14) comprises a third positioning unit (15) configured to change a relative arrangement between the first and the second contact portion (24, 26).

2. The device (10) of claim 1,
wherein the third positioning unit (15) is operable independently of the first and second positioning units (32, 36) of the positioning arrangement (30).

3. The device (10) of claim 1 or 2,
wherein the support unit (14) is configured to support the workpiece (12) to be machined at least along half of a length (B) to be machined.

4. The device (10) of any one of the preceding claims,
wherein the third positioning unit (15) is configured to change a relative arrangement of the first and second contact portions (24, 26) along at least one predetermined axis (V), the predetermined axis (V) in particular being substantially parallel to the first axis (Z).

5. The device (10) of claim 4,
wherein the third positioning unit (15) comprises at least one member (72) that is displaceable, preferably guided along a predetermined direction, and configured to push the first or the second contact portion (24, 26) in a defined direction along the predetermined axis (V).

6. The device (10) of any one of the preceding claims,
wherein the third positioning unit (15) comprises at least one elastically deformable portion (70) and is configured to change the relative arrangement of the first and second contact portions (24, 26) under elastic deformation of the elastically deformable portion (70).

7. The device (10) of any one of the preceding claims,
wherein the third positioning unit (15) provides means (110, 112, 116) for fixing the first or the second contact portion (24, 26) in a desired target position relative to one another.

8. The device (10) of any one of the preceding claims,
wherein the first contact portion (24) and the second contact portion (26) have different lengths and/or wherein the first contact portion (24) can be positioned closer to a workpiece restraint (104) of the machine tool (100) than the second contact portion (26).

9. The device (10) of any one of the preceding claims,
wherein the device comprises a clamping arrangement (84) configured to clamp the workpiece (12) to be machined while it is supported by the support unit (14).

10. The device (10) of claim 9,
wherein the clamping arrangement (84) for clamping the workpiece (12) is configured to interact with a portion of the workpiece (12) to be machined that is arranged close to or in the area of the second contact portion (26).

11. The device (10) of any one of the preceding claims,
wherein the positioning arrangement (30) comprises a coupling area (28) on which the support unit (14) can be arranged, wherein the coupling area (28) can be positioned in accordance with positioning of the first and second positioning units (32, 36).

12. The device (10) of any one of the preceding claims,
wherein the first positioning unit (32) comprises at least one first position adjusting unit (35) comprising an elastically deformable area (43) and/or at least one flexure bearing.

13. The device (10) of any one of the preceding claims,
wherein the positioning arrangement (30) is configured to adjust an inclination of the support unit (14) about the second axis (X) that is substantially perpendicular to the first and third axes (Z, Y), and in particular wherein the inclination is adjustable with the first positioning unit (32).

14. The device (10) of any one of the preceding claims,
wherein the positioning arrangement (30) is configured to adjust an inclination of the support unit (14) about the first axis (Z), and in particular wherein the inclination is adjustable with the second positioning unit (36).

15. The device (10) of any one of the preceding claims,
wherein the positioning arrangement (30) comprises a fourth positioning unit (40) for positioning the support unit (14) along the second axis (X), wherein the second axis (X) is substantially perpendicular to the first axis (Z) and/or the third axis (Y).

16. A method for supporting an elongate workpiece (12) for machining with a machine tool (100), wherein the supporting is carried out in particular with a device (10) of any one of the preceding claims,
wherein the machine tool (100) comprises a support unit (14) which can be brought into contact with the workpiece (12) to be machined,
wherein the support unit (14) has a contact area (22) extending in the direction of a longitudinal workpiece axis (L) of the workpiece (12) to be machined, wherein the support unit (14) can be brought into contact with the workpiece (12) via the contact area (22), and wherein the contact area (22) is subdivided into at least one first and one second contact portion (24, 26) in the direction of the longitudinal workpiece axis (L),
comprising the steps of:
a) restraining the workpiece (12) in a restraint device (104) of the machine tool (100) such that a predetermined free length (F) of the workpiece extends into a machining area of the machine tool (100);
b) positioning the support unit (14) relative to the workpiece with a positioning arrangement (30), and
c) positioning the second contact portion (26) of the support unit (14) relative to the first contact portion (24) in accordance with an outer contour of the workpiece (12) to be machined.

## Revendications

1. Dispositif (10) de soutien d'une pièce (12) à usiner par une machine-outil (100), comportant :
- une unité d'appui (14) qui peut être amenée en contact avec la pièce à usiner (12), et
- un agencement de positionnement (30) pour positionner l'unité d'appui (14), l'agencement de positionnement (30) comprenant au moins une première unité de positionnement (32) pour positionner l'unité d'appui (14) le long d'au moins un premier axe (Z) et au moins une deuxième unité de positionnement (36) pour positionner l'unité d'appui (14) dans un plan (X, Y) défini par un deuxième et un troisième axe, le premier axe (Z), le deuxième axe (X) et le troisième axe (Y) étant sensiblement perpendiculaires l'un à l'autre,
**caractérisé en ce que** l'unité d'appui (14) comprend une zone de contact (22) qui s'étend dans la direction d'un axe longitudinal de pièce (L) de la pièce à usiner (12), l'unité d'appui (14) pouvant être amenée en contact avec la pièce (12) par l'intermédiaire de la zone de contact (22), et la zone de contact (22) étant divisée en au moins une première et une deuxième partie de contact (24, 26) dans la direction de l'axe longitudinal de pièce (L), et
**en ce que** l'unité d'appui (14) comprend une troisième unité de positionnement (15) qui est conçue pour modifier une disposition relative entre la première et la deuxième partie de contact (24, 26).

2. Dispositif (10) selon la revendication 1,
dans lequel la troisième unité de positionnement (15) peut être actionnée indépendamment des première et deuxième unités de positionnement (32, 36) de l'agencement de positionnement (30).

3. Dispositif (10) selon la revendication 1 ou la revendication 2,
dans lequel l'unité d'appui (14) est conçue pour soutenir la pièce à usiner (12) au moins sur la moitié d'une longueur à usiner (B).

4. Dispositif (10) selon l'une des revendications précédentes,
dans lequel la troisième unité de positionnement (15) est conçue pour modifier une disposition relative des première et deuxième parties de contact (24, 26) le long d'au moins un axe prédéterminé (V), l'axe prédéterminé (V) étant en particulier sensiblement parallèle au premier axe (Z).

5. Dispositif (10) selon la revendication 4,
dans lequel la troisième unité de positionnement (15) comprend au moins un élément (72) déplaçable, de préférence guidé, le long d'une direction prédéterminée, qui est conçu pour pousser la première ou la deuxième partie de contact (24, 26) dans une direction définie le long de l'axe prédéterminé (V).

6. Dispositif (10) selon l'une des revendications précédentes,
dans lequel la troisième unité de positionnement (15) comprend au moins une partie élastiquement déformable (70) et est conçue pour modifier la disposition relative des première et deuxième parties de contact (24, 26) sous l'effet d'une déformation élastique de la partie élastiquement déformable (70).

7. Dispositif (10) selon l'une des revendications précédentes,
dans lequel la troisième unité de positionnement (15) fournit des moyens (110, 112, 116) pour fixer la première ou la deuxième partie de contact (24, 26) dans une position de consigne souhaitée l'une par rapport à l'autre.

8. Dispositif (10) selon l'une des revendications précédentes,
dans lequel la première partie de contact (24) et la deuxième partie de contact (26) présentent des longueurs différentes l'une de l'autre et/ou dans lequel la première partie de contact (24) peut être positionnée plus près d'un bridage de pièce (104) de la machine-outil (100) que la deuxième partie de contact (26).

9. Dispositif (10) selon l'une des revendications précédentes,
dans lequel le dispositif comprend un agencement de serrage (84) qui est conçu pour serrer la pièce à usiner (12) pendant que celle-ci est soutenue par l'unité d'appui (14).

10. Dispositif (10) selon la revendication 9,
dans lequel l'agencement de serrage (84) destiné à serrer la pièce (12) est conçu pour interagir avec une partie de la pièce à usiner (12) qui est disposée à proximité ou dans la zone de la deuxième partie de contact (26).

11. Dispositif (10) selon l'une des revendications précédentes,
dans lequel l'agencement de positionnement (30) comprend une zone de couplage (28) sur laquelle l'unité d'appui (14) peut être disposée, la zone de couplage (28) pouvant être positionnée en fonction d'un positionnement des première et deuxième unités de positionnement (32, 36).

12. Dispositif (10) selon l'une des revendications précédentes,
dans lequel la première unité de positionnement (32) comprend au moins une première unité de réglage de position (35) qui comprend une zone élastiquement déformable (43) et/ou au moins une articulation à corps solide.

13. Dispositif (10) selon l'une des revendications précédentes,
dans lequel l'agencement de positionnement (30) est conçu pour régler une inclinaison de l'unité d'appui (14) autour du deuxième axe (X) qui s'étend sensiblement perpendiculairement aux premier et troisième axes (Z, Y), et en particulier dans lequel l'inclinaison est réglable par la première unité de positionnement (32).

14. Dispositif (10) selon l'une des revendications précédentes,
dans lequel l'agencement de positionnement (30) est conçu pour régler une inclinaison de l'unité d'appui (14) autour du premier axe (Z), et dans lequel notamment l'inclinaison est réglable par la deuxième unité de positionnement (36).

15. Dispositif (10) selon l'une des revendications précédentes,
dans lequel l'agencement de positionnement (30) comprend une quatrième unité de positionnement (40) pour positionner l'unité d'appui (14) le long du deuxième axe (X), le deuxième axe (X) étant sensiblement perpendiculaire au premier axe (Z) et/ou au troisième axe (Y).

16. Procédé pour soutenir une pièce allongée (12) pour son usinage au moyen d'une machine-outil (100), le soutien étant en particulier assuré au moyen d'un dispositif (10) selon l'une des revendications précédentes,
dans lequel la machine-outil (100) comprend une unité d'appui (14) qui peut être amenée en contact avec la pièce à usiner (12),
dans lequel l'unité d'appui (14) comprend une zone de contact (22) qui s'étend dans la direction d'un axe longitudinal de pièce (L) de la pièce à usiner (12), l'unité d'appui (14) pouvant être amenée en contact avec la pièce (12) par l'intermédiaire de la zone de contact (22), et la zone de contact (22) étant divisée en au moins une première et une deuxième partie de contact (24, 26) dans la direction de l'axe longitudinal de pièce (L),
comprenant les étapes de :
a) bridage de la pièce (12) dans un dispositif de bridage (104) de la machine-outil (100), de sorte que celle-ci s'étende avec une longueur libre prédéterminée (F) dans une zone d'usinage de la machine-outil (100) ;
b) positionnement de l'unité d'appui (14) par rapport à la pièce au moyen d'un agencement de positionnement (30), et
c) positionnement de la deuxième partie de contact (26) de l'unité d'appui (14) par rapport à la première partie de contact (24) en fonction d'un contour extérieur de la pièce à usiner (12).
